# EUROPEAN PATENT APPLICATION

(11) **EP 4 366 378 A1**
(43) Date of publication of application: **08.05.2024**
(21) Application number: 22845314.8
(22) Date of filing: 19.07.2022
(51) Int. Cl.: H04W 36/00

(54) **METHOD FOR CONTROLLING TRANSMISSION AND RELATED APPARATUS**

(30) Priority: 21.07.2021 CN 202110822924; 05.08.2021 CN 202110897870
(71) Applicant: Huawei Technologies Co., Ltd., Longgang Shenzhen, Guangdong 518129 (CN)
(72) Inventor: ZHANG, Mengchen, Shenzhen, Guangdong 518129 (CN); XU, Haibo, Shenzhen, Guangdong 518129 (CN); AHLUWALIA, Jagdeep Singh, Shenzhen, Guangdong 518129 (CN)
(74) Representative: Gill Jennings & Every LLP
(86) International application number: PCT/CN2022/106522
(87) International publication number: WO 2023/001149

(57) **Abstract**

Embodiments of this application provide a transmission control method and a related apparatus. The method is applied to a terminal in non-radio resource control RRC connected state, and includes: performing, when a first preset condition is met, an RRC connection resume procedure that is for a radio access network-based notification area update RNAU, where the first preset condition includes that a second timer expires and a first timer does not run; or the first preset condition includes that the terminal receives a system information block SIB1 of a serving cell, the serving cell does not belong to a configured radio access network-based notification area, and a first timer does not run; and the first timer is started when the terminal initiates an RRC connection resume procedure that is for small data transmission SDT, and the second timer is started when the terminal receives an RRC release message including duration of the second timer. In this application, triggering of the RNAU can be prevented in an SDT procedure, thereby avoiding an impact on the small data transmission and avoiding unnecessary power consumption and signaling overheads.

## Description

This application claims priority to Chinese Patent Application No. 202110822924.X, filed with the China National Intellectual Property Administration on July 21, 2021 and entitled "COMMUNICATION METHOD, TERMINAL, AND NETWORK DEVICE", and to Chinese Patent Application No. 202110897870.3, filed with the China National Intellectual Property Administration on August 5, 2021 and entitled "TRANSMISSION CONTROL METHOD AND RELATED APPARATUS", both of which are incorporated herein by reference in their entireties.

### TECHNICAL FIELD

This application relates to the field of communications technologies, and in particular, to a data transmission method and a related apparatus.

### BACKGROUND

In a communication system, a communication protocol stack between a terminal and a network device may include a radio resource control (radio resource control, RRC) layer. Currently, there are three RRC states of the terminal: an RRC idle (RRC IDLE) state, an RRC inactive (RRC INACTIVE) state, and an RRC connected (RRC CONNECTED) state. The terminal in RRC INACTIVE state may perform, with the network device, transmission of small data (small data) through an RRC connection resume procedure, which may be referred to as small data transmission (small data transmission, SDT). When the terminal is in RRC INACTIVE state, a radio access network (radio access network, RAN) may manage a RAN-based notification area (RAN-based notification area, RNA). For example, the terminal may trigger an RNA update (RNA update, RNAU), and perform an RRC connection resume procedure that is for the RNAU, to notify the network device of an RNA in which the terminal is currently located.

When the terminal performs the SDT, performing of the RNAU may be triggered. In this case, the terminal may stop currently performed SDT, and perform the RNAU, which affects the transmission of the small data. For example, a transmission delay is increased, and power consumption and signaling overheads are also increased when the terminal initiates the SDT again subsequently.

### SUMMARY

Embodiments of this application disclose a transmission control method and a related apparatus, to avoid an impact on transmission of small data and avoid unnecessary power consumption and signaling overheads.

According to a first aspect, an embodiment of this application provides a transmission control method, applied to a terminal in non-radio resource control RRC connected state, where the method includes: performing, when a first preset condition is met, an RRC connection resume procedure that is for a radio access network-based notification area update RNAU, where the first preset condition includes that a second timer expires and a first timer does not run; or the first preset condition includes that the terminal receives a system information block SIB1 of a first serving cell, the first serving cell does not belong to a configured radio access network-based notification area RNA, and a first timer does not run; and the first timer is started when the terminal initiates an RRC connection resume procedure that is for small data transmission SDT, and the second timer is started when the terminal receives an RRC release message including duration of the second timer.

In some embodiments, the RRC connection resume procedure that is for the RNAU includes sending an RRC request message, where a resume cause resumeCause information element IE in the RRC request message is rna-Update.

For example, the second timer is T380.

In this application, when the first timer runs (in other words, when an SDT procedure is being performed), the RNAU is not performed. When the SDT is performed, a network device may obtain an RNA in which the terminal is located. Not performing the RNAU does not affect obtaining of a status of the terminal by the network device, and can avoid an impact on small data of which transmission is performed in the SDT procedure, for example, avoid an increase in a transmission delay, and avoid unnecessary signaling overheads and power consumption that are increased by re-initiating the SDT subsequently.

In a possible implementation, that the first timer does not run means: The first timer is not started.

In some embodiments, that the first timer is not started indicates that there is no requirement for the SDT.

In a possible implementation, before the performing, when a first preset condition is met, a radio resource control RRC connection resume procedure that is for a radio access network-based notification area update RNAU, the method further includes: initiating the RRC connection resume procedure that is for the SDT, and starting the first timer; and stopping the first timer when cell reselection occurs, where the first preset condition includes that the first timer does not run and a serving cell of the terminal does not belong to the configured RNA, that the first timer does not run is that the first timer is stopped, and the serving cell of the terminal is a serving cell obtained through the cell reselection that occurs on the terminal.

In some embodiments, the RRC connection resume procedure that is for the SDT includes sending the RRC request message, where the resumeCause IE in the RRC request message is mo-data.

In a possible implementation, the first preset condition further includes: The terminal is in RRC inactive state; and/or the terminal cannot perform an SDT procedure in the serving cell.

In some embodiments, that the terminal cannot perform an SDT procedure in the serving cell includes: The terminal cannot continue a previous SDT procedure in the serving cell. In some embodiments, that the terminal cannot perform an SDT procedure in the serving cell includes: The terminal cannot initiate a new SDT procedure in the serving cell.

In a possible implementation, the method further includes: when the first timer runs, if an RRC reject message is received, stopping the first timer; and if the second timer does not run, setting a first variable to a first value, where that the first variable is the first value indicates that there is a pending RNA update procedure.

In this application, if the second timer expires when the first timer runs (in other words, when the SDT procedure is being performed), the terminal neither performs the RNAU nor sets the first variable to the first value, so as to avoid an impact on the currently performed SDT procedure. When the SDT procedure ends abnormally (for example, when the first timer stops or expires), and the second timer does not run, the terminal may set the first variable to the first value, so that the RNAU can be normally performed subsequently.

In a possible implementation, the method further includes: when the first timer runs, if an RRC reject message is received, stopping the first timer; and if the second timer does not run, performing the radio resource control RRC connection resume procedure that is for the RNAU.

In this application, if the second timer expires when the first timer runs (in other words, when the SDT procedure is being performed), the terminal does not perform the RNAU, so as to avoid an impact on the currently performed SDT procedure. When the SDT procedure ends abnormally (for example, when the first timer stops or expires), and the second timer does not run, the terminal then performs the RNAU, to ensure normal performing of the RNAU.

In a possible implementation, the method further includes: when the first timer runs, if the RRC reject message is received, stopping the first timer; if the second timer does not run, starting a third timer; and when the third timer expires, if the first timer does not run, performing the RRC connection resume procedure that is for the RNAU.

In a possible implementation, duration of the third timer is the same as the duration of the second timer.

In a possible implementation, duration of the third timer is different from the duration of the second timer.

In a possible implementation, the non-radio resource control RRC connected state is an RRC inactive state; and after the terminal receives the RRC reject message, the terminal is in RRC inactive state.

In this application, if the second timer expires when the first timer runs (in other words, when the SDT procedure is being performed), the terminal neither performs the RNAU nor starts the third timer, so as to avoid an impact on the currently performed SDT procedure. When the SDT procedure ends abnormally (for example, when the first timer stops or expires), and the second timer does not run, the terminal may start the third timer. When the third timer expires and the first timer does not run, the terminal then performs the radio resource control RRC connection resume procedure that is for the RNAU, to ensure normal performing of the RNAU.

In a possible implementation, the method further includes: when the first timer expires, if the second timer does not run, setting a first variable to a first value, where that the first variable is the first value indicates that there is a pending RNA update procedure.

In a possible implementation, the method further includes: when the first timer expires, if the second timer does not run, performing the radio resource control RRC connection resume procedure that is for the RNAU.

In a possible implementation, the method further includes: when the first timer expires, if the second timer does not run, starting a third timer; and when the third timer expires, if the first timer does not run, performing the RRC connection resume procedure that is for the RNAU.

In a possible implementation, duration of the third timer is the same as the duration of the second timer.

In a possible implementation, duration of the third timer is different from the duration of the second timer.

In a possible implementation, the non-radio resource control RRC connected state is an RRC inactive state; and after the first timer expires, the terminal is in RRC inactive state.

In a possible implementation, the method further includes: when the first timer runs, if cell reselection occurs, stopping the first timer; receiving a SIB1 of a second serving cell, where the second serving cell is a serving cell obtained through the cell reselection that occurs on the terminal; and when the SIB1 of the second serving cell is received, if the second serving cell belongs to the configured RNA, and the second timer does not run, setting a first variable to a first value, where that the first variable is the first value indicates that there is a pending RNA update procedure.

In a possible implementation, the method further includes: when the first timer runs, if cell reselection occurs, stopping the first timer; receiving a SIB1 of a second serving cell, where the second serving cell is a serving cell obtained through the cell reselection that occurs on the terminal; and when the SIB1 of the second serving cell is received, if the second serving cell belongs to the configured RNA, and the second timer does not run, performing the radio resource control RRC connection resume procedure that is for the RNAU.

In a possible implementation, the method further includes: when the first timer runs, if cell reselection occurs, stopping the first timer; receiving a SIB1 of a second serving cell, where the second serving cell is a serving cell obtained through the cell reselection that occurs on the terminal; when the SIB1 of the second serving cell is received, if the second serving cell belongs to the configured RNA, and the second timer does not run, starting a third timer; and when the third timer expires, if the first timer does not run, performing the RRC connection resume procedure that is for the RNAU.

In a possible implementation, duration of the third timer is the same as the duration of the second timer.

In a possible implementation, duration of the third timer is different from the duration of the second timer.

In a possible implementation, the non-radio resource control RRC connected state is an RRC inactive state; and after cell reselection occurs on the terminal, the terminal is in RRC inactive state.

In a possible implementation, after the setting a first variable to a first value, the method further includes: if access barring is alleviated and a non-access NAS stratum does not request an RRC layer to perform RRC connection resume, and if the first variable is the first value, performing the RRC connection resume procedure that is for the RNAU.

In a possible implementation, the non-radio resource control RRC connected state is the RRC inactive state.

According to a second aspect, an embodiment of this application provides another transmission control method, applied to a terminal in non-RRC connected state, where the method includes: setting a first variable to a first value when a first preset condition is met, where the first variable is the first value and indicates that there is a pending RNA update procedure, the first preset condition includes that a first timer does not run, and the first timer is started when the terminal receives an RRC release message including duration of the first timer.

For example, the first timer is T380.

In a possible implementation, the first preset condition further includes that the terminal receives an RRC reject message when a second timer runs, the second timer is started when the terminal initiates an RRC connection resume procedure that is for SDT, and the second timer is stopped when the terminal receives the RRC reject message.

In a possible implementation, the first preset condition further includes that the second timer expires, and the second timer is started when the terminal initiates the RRC connection resume procedure that is for the SDT.

In a possible implementation, the non-RRC connected state is an RRC inactive state; and after the second timer expires, the terminal is in RRC inactive state.

In a possible implementation, the first preset condition further includes: The terminal receives a SIB1 of a first serving cell, and the first serving cell belongs to a configured RNA; and before the setting a first variable to a first value when a first preset condition is met, the method further includes: when the second timer runs, stopping the second timer if cell reselection occurs, where the second timer is started when the terminal initiates the RRC connection resume procedure that is for the SDT; and receiving the SIB1 of the first serving cell, where the first serving cell is a serving cell obtained through the cell reselection that occurs on the terminal.

In a possible implementation, after the setting a first variable to a first value, the method further includes: if access barring is alleviated and a non-access NAS stratum does not request an RRC layer to perform RRC connection resume, and if the first variable is the first value, performing an RRC connection resume procedure that is for an RNAU.

In a possible implementation, the non-RRC connected state is the RRC inactive state.

In this application, if the first timer expires when the second timer runs (in other words, when an SDT procedure is being performed), the terminal neither performs the RNAU nor sets the first variable to the first value, so as to avoid an impact on the currently performed SDT procedure. When the SDT procedure ends abnormally (for example, the second timer stops or expires), and the first timer does not run, the terminal may set the first variable to the first value, so that the RNAU can be normally performed subsequently.

According to a third aspect, an embodiment of this application provides still another transmission control method, applied to a terminal in non-RRC connected state. The method includes: starting a first timer; initiating an RRC connection resume procedure that is for SDT; indicating, by a lower layer, first information to an upper layer in the RRC connection resume procedure that is for the SDT, where the first information indicates that the RRC connection resume procedure that is for the SDT succeeds; and stopping the first timer based on the first information.

In some embodiments, the terminal starts the first timer when receiving an RRC release message including duration of the first timer. For example, the first timer is T380.

In this application, when performing an SDT procedure, the terminal may stop the first timer, so as to prevent an RNAU from being triggered when the first timer expires. When the SDT is performed, a network device may obtain an RNA in which the terminal is located, and not triggering the RNAU not only does not affect obtaining of a status of the terminal by the network device, but also can avoid an impact on transmission of small data in the SDT procedure.

In a possible implementation, the initiating an RRC connection resume procedure that is for SDT includes: The terminal sends an RRC request message to the network device, and the lower layer of the terminal receives a first response message sent by the network device in response to the RRC request message. The indicating, by a lower layer, first information to an upper layer includes: The lower layer indicates the first information to the upper layer based on the first response message.

In a possible implementation, the RRC connection resume procedure that is for the SDT includes: The terminal sends the RRC request message to the network device in a random access procedure. The indicating, by a lower layer, first information to an upper layer includes: A medium access control MAC layer indicates the first information to an RRC layer, where the first information indicates that contention resolution succeeds. The stopping the first timer based on the first information includes: The RRC layer stops the first timer after receiving the first information indicated by the MAC layer.

In a possible implementation, that the terminal sends an RRC request message to the network device includes: The terminal sends the RRC request message to the network device in a random access procedure, where the first response message indicates that contention resolution succeeds.

For example, the first response message is a contention resolution message.

In a possible implementation, the RRC connection resume procedure that is for the SDT includes: The terminal sends the RRC request message to the network device based on a preconfigured uplink resource, where the first information indicates that the RRC request message is successfully sent.

In a possible implementation, the indicating, by a lower layer, first information to an upper layer includes: A medium access control MAC layer indicates the first information to the RRC layer; and the stopping the first timer based on the first information includes: The RRC layer stops the first timer after receiving the first information indicated by the MAC layer. Alternatively, the indicating, by a lower layer, first information to an upper layer includes: A physical layer indicates the first information to the RRC layer; and the stopping the first timer based on the first information includes: The RRC layer stops the first timer based on the first information indicated by the physical layer. Alternatively, before the indicating, by a lower layer, first information to an upper layer, the method further includes: The physical layer indicates second information to the MAC layer, where the second information indicates that the RRC request message is successfully sent. The indicating, by the lower layer, the first information to the upper layer includes: The MAC layer receives the second information indicated by the physical layer, and indicates the first information to the RRC layer. The stopping the first timer based on the first information includes: The RRC layer stops the first timer after receiving the first information indicated by the MAC layer.

In a possible implementation, that the terminal sends an RRC request message to the network device includes: The terminal sends the RRC request message to the network device based on the preconfigured uplink resource, where the first response message indicates that the RRC request message is successfully sent.

In a possible implementation, the initiating an RRC connection resume procedure that is for SDT includes: initiating the RRC connection resume procedure that is for the SDT, and starting a second timer.

In a possible implementation, after the stopping the first timer, the method further includes: when the second timer runs, if an RRC reject message is received, stopping the second timer; and if the first timer does not run, setting a first variable to a first value, where that the first variable is the first value indicates that there is a pending RNA update procedure.

In this application, if the first timer is stopped in the SDT procedure, the terminal may set the first variable to the first value when the SDT procedure ends abnormally (for example, the second timer stops or expires), so that the RNAU may still be subsequently triggered, to ensure normal performing of the RNAU.

In a possible implementation, after the stopping the first timer, the method further includes: when the second timer runs, if the RRC reject message is received, stopping the second timer; and if the first timer does not run, performing a radio resource control RRC connection resume procedure that is for the RNAU.

In this application, if the first timer is stopped in the SDT procedure, the terminal may perform the RNAU when the SDT procedure ends abnormally (for example, the second timer stops or expires), to ensure normal performing of the RNAU.

In a possible implementation, after the stopping the first timer, the method further includes: when the second timer runs, if the RRC reject message is received, stopping the second timer; if the first timer does not run, starting a third timer; and when the third timer expires, if the second timer does not run, performing the RRC connection resume procedure that is for the RNAU.

In a possible implementation, duration of the third timer is the same as the duration of the first timer.

In a possible implementation, duration of the third timer is different from the duration of the first timer.

In a possible implementation, the non-radio resource control RRC connected state is an RRC inactive state; and after the terminal receives the RRC reject message, the terminal is in RRC inactive state.

In this application, if the first timer is stopped in the SDT procedure, the terminal may start the third timer when the SDT procedure ends abnormally (for example, the second timer stops or expires), and perform the RNAU when the third timer expires and the second timer does not run, to ensure normal performing of the RNAU.

In a possible implementation, the method further includes: when the second timer expires, if the first timer does not run, setting a first variable to a first value, where that the first variable is the first value indicates that there is a pending RNA update procedure.

In a possible implementation, the method further includes: when the second timer expires, if the first timer does not run, performing the radio resource control RRC connection resume procedure that is for the RNAU.

In a possible implementation, the method further includes: when the second timer expires, if the first timer does not run, starting a third timer; and when the third timer expires, if the second timer does not run, performing the RRC connection resume procedure that is for the RNAU.

In a possible implementation, duration of the third timer is the same as the duration of the first timer.

In a possible implementation, duration of the third timer is different from the duration of the first timer.

In a possible implementation, the non-radio resource control RRC connected state is an RRC inactive state; and after the first timer expires, the terminal is in RRC inactive state.

In a possible implementation, the method further includes: when the second timer runs, if cell reselection occurs, stopping the second timer; receiving a SIB1 of a first serving cell, where the first serving cell is a serving cell obtained through the cell reselection that occurs on the terminal; and when the SIB1 of the first serving cell is received, if the first serving cell belongs to the configured RNA, and the first timer does not run, setting a first variable to a first value, where that the first variable is the first value indicates that there is a pending RNA update procedure.

In a possible implementation, the method further includes: when the second timer runs, if cell reselection occurs, stopping the second timer; receiving a SIB1 of a first serving cell, where the first serving cell is a serving cell obtained through the cell reselection that occurs on the terminal; and when the SIB1 of the first serving cell is received, if the first serving cell belongs to the configured RNA, and the first timer does not run, performing the radio resource control RRC connection resume procedure that is for the RNAU.

In a possible implementation, the method further includes: when the second timer runs, if cell reselection occurs, stopping the second timer; receiving a SIB1 of a first serving cell, where the first serving cell is a serving cell obtained through the cell reselection that occurs on the terminal; when the SIB 1 of the first serving cell is received, if the first serving cell belongs to the configured RNA, and the first timer does not run, starting a third timer; and when the third timer expires, if the second timer does not run, performing the RRC connection resume procedure that is for the RNAU.

In a possible implementation, duration of the third timer is the same as the duration of the second timer.

In a possible implementation, duration of the third timer is different from the duration of the second timer.

In a possible implementation, the non-radio resource control RRC connected state is an RRC inactive state; and after cell reselection occurs on the terminal, the terminal is in RRC inactive state.

In a possible implementation, after the setting a first variable to a first value, the method further includes: if access barring is alleviated and a non-access NAS stratum does not request an RRC layer to perform RRC connection resume, and if the first variable is the first value, performing the RRC connection resume procedure that is for the RNAU.

In a possible implementation, the non-RRC connected state is the RRC inactive state.

According to a fourth aspect, embodiments of this application provide a terminal, including a transceiver, a processor, and a memory. The memory is configured to store computer program code, the computer program code includes computer instructions, and the processor invokes the computer instructions, so that the foregoing user equipment performs the transmission control method provided in any one of the first aspect to the third aspect and the implementations of the first aspect to the third aspect in embodiments of this application.

According to a fifth aspect, an embodiment of this application provides a communication apparatus. The apparatus may be a terminal or a chip in the terminal. The communication apparatus includes a processing unit. The processing unit is configured to perform the transmission control method provided in any one of the first aspect to the third aspect and the implementations of the first aspect to the third aspect in embodiments of this application.

According to a sixth aspect, an embodiment of this application provides a computer storage medium. The computer storage medium stores a computer program, the computer program includes program instructions, and when the program instructions are executed by a processor, the transmission control method provided in any one of the first aspect to the third aspect and the implementations of the first aspect to the third aspect in embodiments of this application is performed.

According to a seventh aspect, an embodiment of this application provides a computer program product. When the computer program product runs on a communication device, the communication device is enabled to perform the transmission control method provided in any one of the first aspect to the third aspect and the implementations of the first aspect to the third aspect in embodiments of this application.

According to an eighth aspect, an embodiment of this application provides an electronic device. The electronic device includes an apparatus for performing the method in any embodiment of this application. The electronic device is, for example, a chip.

### BRIEF DESCRIPTION OF DRAWINGS

The following describes accompanying drawings used in embodiments of this application.
FIG. 1 is a schematic diagram of an architecture of a communication system according to an embodiment of this application;
FIG. 2 is a schematic diagram of an architecture of a user plane communication protocol stack in new radio NR;
FIG. 3 is a schematic diagram of an architecture of a control plane communication protocol stack in NR;
FIG. 4 is a schematic diagram of switching between radio resource control RRC states of user equipment UE;
FIG. 5 to FIG. 10 are some schematic flowcharts of small data transmission SDT according to embodiments of this application;
FIG. 11 is a schematic flowchart of a transmission control method according to an embodiment of this application;
FIG. 12 is a sequence diagram according to an embodiment of this application;
FIG. 13 to FIG. 17 are schematic flowcharts of other transmission control methods according to embodiments of this application;
FIG. 18 is another sequence diagram according to an embodiment of this application; and
FIG. 19 is a schematic flowchart of another transmission control method according to an embodiment of this application.

### DESCRIPTION OF EMBODIMENTS

The technical solutions according to embodiments of this application are clearly described in the following with reference to the accompanying drawings. Terms used in implementations of embodiments of this application are merely used to explain specific embodiments of this application, and are not intended to limit this application.

First, a related apparatus and a communication system related to this application are described.

In embodiments of this application, a network device may be a device configured to send or receive information. In some embodiments, the network device is an access network device, for example, but is not limited to a base station, user equipment (user equipment, UE), a wireless access point (access point, AP), a transmission reception point (transmission reception point, TRP), a relay device, or another network device that has a function of the base station. The base station is a device deployed in a radio access network (radio access network, RAN) to provide a wireless communication function. In different radio access systems, names of base stations may be different, for example, but are not limited to: a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved base station (evolved NodeB, eNodeB) in long term evolution (long term evolution, LTE), a next generation base station (gNodeB, gNB) in a fifth generation mobile communication technology (5th generation mobile network, 5G), namely, new radio access (new radio, NR), or a base station in another future network system.

In embodiments of this application, the terminal may be a device having a wireless communication function. In some embodiments, the terminal is UE. In some embodiments, the terminal may also be referred to as a mobile station, an access terminal, a user agent, or the like. For example, the terminal is a terminal in a form of a handheld device, a wearable device, a computing device, a portable device, a vehicle-mounted device, or the like. For example, the terminal is specifically a device such as a cellular phone, a smartphone, smart glasses, a laptop computer, a personal digital assistant, or a cordless phone. In the following embodiments, an example in which the terminal is UE is used for description.

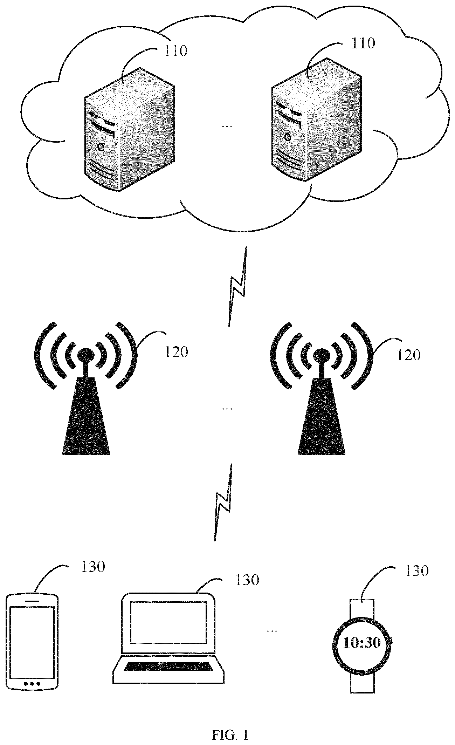

FIG. 1 is a schematic diagram of an architecture of a communication system according to an embodiment of this application. The communication system may be but is not limited to GSM, CDMA, wideband code division multiple access (wideband code division multiple access, WCDMA), time-division code division multiple access (time-division code division multiple access, TD-CDMA), universal mobile telecommunications system (universal mobile telecommunications system, UMTS), LTE, NR, or another future network system.

As shown in FIG. 1, the communication system may include a core network 110, a network device 120, and UE 130. The core network 110 may be connected to at least one network device 120, the network device 120 may provide a wireless communication service for at least one UE 130, and the UE 130 may be connected to the at least one network device 120 through an air interface. The core network 110 is a key control node in the communication system, and is mainly responsible for a signaling processing function, for example, but not limited to implementing functions such as access control, mobility management, and session management. In some embodiments, the network device 120 is a base station. In NR, the core network 110 may be referred to as a 5G core network (5G Core, 5GC) 110, and the network device 120 may be referred to as a gNB 120. In some embodiments, at least one base station may form a next generation radio access network (next generation radio access network, NG-RAN) node. The NG-RAN node may include at least one gNB 120 connected to the 5GC 110 through an NG interface, and the at least one gNB 120 in the NG-RAN node may be connected to and communicate with each other through an Xn-C interface. The UE 130 may be connected to the gNB 120 through a Uu interface.

The core network 110 may send downlink data to the UE 130 through the network device 120, or the UE 130 may send uplink data to the core network 110 through the connected network device 120. It should be noted that forms and quantities of the core network 110, the network device 120, and the UE 130 shown in FIG. 1 are merely used as examples. This is not limited in embodiments of this application.

For ease of understanding, embodiments of this application are mainly described by using an example in which an applied communication system is LTE and/or NR, a network device is a base station, and one NG-RAN includes at least one base station.

The following describes an example of an NR communication protocol stack for description.

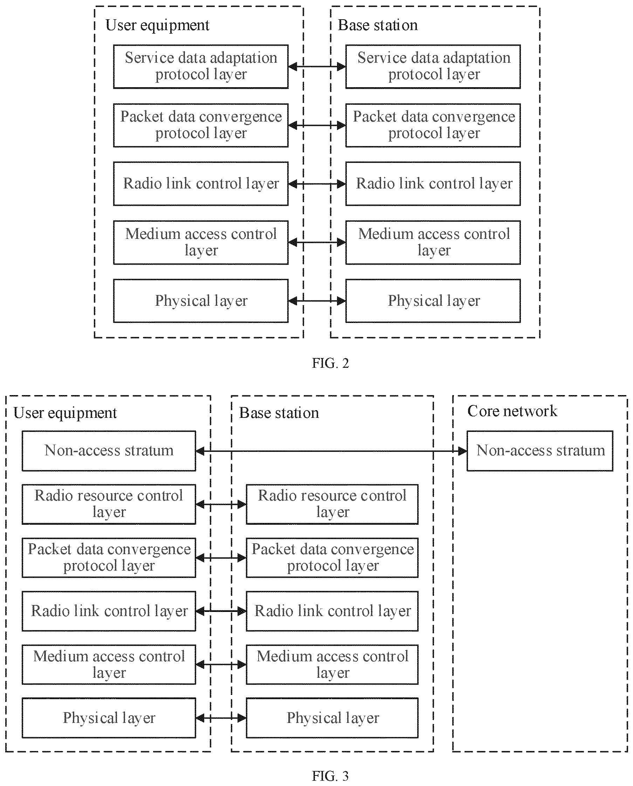

FIG. 2 is a schematic diagram of an architecture of a user plane protocol stack in NR. The user plane protocol stack may include a physical (physical, PHY) layer, a medium access control (medium access control, MAC) layer, a radio link control (radio link control, RLC) layer, a packet data convergence protocol (packet data convergence protocol, PDCP) layer, and a service data adaptation protocol (service data adaptation protocol, SDAP) layer.

FIG. 3 is a schematic diagram of an architecture of a control plane protocol stack in NR. The control plane protocol stack may include a PHY layer, a MAC layer, an RLC layer, a PDCP layer, a radio resource control (radio resource control, RRC) layer, and a non-access stratum (non-access stratum, NAS).

Compared with a user plane protocol stack in LTE, a user plane protocol stack in NR is newly added with an SDAP layer. However, architectures of other layers are consistent, and specific descriptions are similar. LTE is relatively mature, and details are not described.

As shown in FIG. 2 and FIG. 3, a lower layer of the PDCP layer includes the RLC layer. The PDCP layer can process an RRC message that is on a control plane. The PDCP layer can compress an IP packet header to reduce a quantity of bits of which transmission is performed over a radio interface. The PDCP layer may be further responsible for encryption of the control plane and integrity protection of transmitted data. At a receiving end, the PDCP layer performs corresponding decryption and decompression operations. One PDCP entity may be configured for each radio bearer. The RLC layer is responsible for segmentation/concatenation, retransmission control, repetition detection, and the like. The RLC layer provides a service for the PDCP layer, and may configure an RLC entity for each radio bearer. The MAC layer controls multiplexing of logical channels, retransmission of a hybrid automatic repeat request, scheduling of an uplink and a downlink, and the like. The MAC layer provides a service for the RLC layer in a form of a logical channel. The PHY layer is responsible for managing encoding/decoding, modulation/demodulation, multi-antenna mapping, and other types of physical layer functions. The PHY layer provides a service for the MAC layer in a form of a transport channel.

As shown in FIG. 2 and FIG. 3, the MAC layer may provide a service for a higher layer (for example, the RLC layer) through a logical channel (logical channel, LCH). Based on a type of sent information, logical channels may be classified into a control channel for transmission of control information on a control plane and a traffic channel for transmission of user data on a user plane. The control channel may include but is not limited to a common control channel (common control channel, CCCH) and a dedicated control channel (dedicated control channel, DCCH). The traffic channel may include but is not limited to a dedicated traffic channel (dedicated traffic channel, DTCH). The CCCH may always exist, and UE that has no RRC connection to the RAN node may also use the CCCH to perform information transmission. The DCCH may be for transmission of dedicated control information between UE and the RAN node. The DTCH may be for transmission of user data between the UE and the RAN node. Generally, the DCCH and the DTCH do not always exist, but can be used for communication between the UE and a base station only after the base station connected to the UE resumes a UE context (UE context). The UE context includes but is not limited to an identifier of the terminal, a radio bearer (radio bearer, RB)-related configuration, an integrity protection and encryption security-related configuration, a quality of service-related configuration, and the like.

An RB may be a connection format set between the UE and the RAN node, and may include related configurations of a physical channel, a transport channel, and a logical channel. RBs may be classified into a signaling radio bearer (signaling radio bearer, SRB) for transmission of the control information on the control plane and a data radio bearer (data radio bearer, DRB) for transmission of the user data on the user plane. A DRB may include a PDCP layer entity (PDCP entity for short), an RLC layer entity (RLC entity for short), and a logical channel.

As shown in FIG. 3, the RRC layer may be for transmission of an RRC message between the UE and the base station. The RRC message is, for example, but not limited to, an RRC resume request (RRCResumeRequest) that is in NR and that may be used by the UE to request to resume a suspended RRC connection, so as to perform data transmission with the base station. The RRC layer belongs to an access stratum (access stratum, AS).

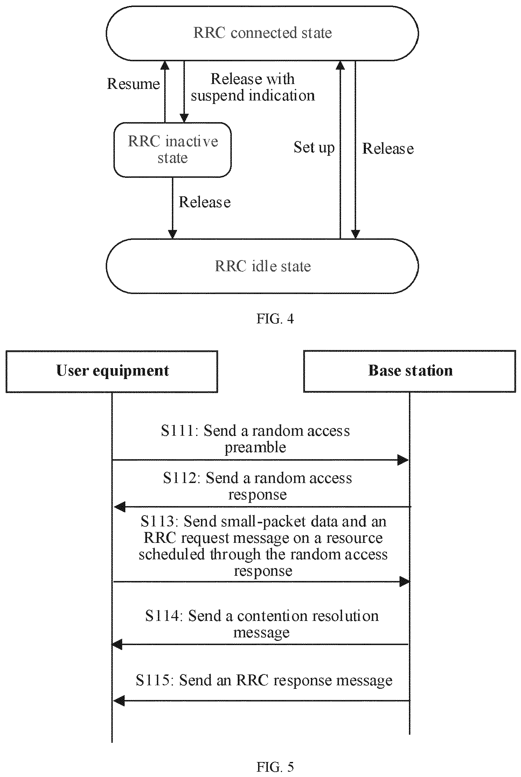

For the RRC layer, currently, there are three RRC states of the UE: an RRC idle (RRC IDLE) state, an RRC inactive (RRC INACTIVE) state, and an RRC connected (RRC CONNECTED) state. Operations performed by the UE in different RRC states are mostly different. For details about the three states and a transition procedure, refer to an example in FIG. 4.

As shown in FIG. 4, when UE is in RRC CONNECTED state, an RRC connection is set up between the UE and a base station. In some embodiments, when the UE is in RRC CONNECTED state, a user plane connection and a control plane connection of the UE may be set up between a SGC and an NG-RAN. The NG-RAN and the UE may retain a UE context of an AS stratum. The NG-RAN may obtain a cell to which the UE belongs, the UE may send or receive unicast data, and a network (for example, the NG-RAN) may control mobility of the UE. For example, the UE may measure a channel between the UE and the base station, and may report a measurement result to the base station. The base station may determine, based on the measurement result, whether to switch the cell to which the UE belongs. In other words, in RRC CONNECTED state, the UE and the base station can normally perform data transmission, and the base station can manage the UE. In some embodiments, if the UE in RRC CONNECTED state needs to send uplink data to the base station, the UE needs to maintain synchronization with the base station based on a timing advance (timing advance, TA). If the UE in RRC CONNECTED state does not obtain uplink synchronization, the UE can initiate random access (random access, RA) to the base station. When an uplink advance timer (timing advance timer, TAT) of the UE keeps running, the UE maintains uplink synchronization. When the TAT of the UE expires, the uplink synchronization of the UE fails. If the UE needs to send uplink data to the base station again, the UE needs to initiate RA, and a new TA is obtained through the RA. In some embodiments, when the UE is in RRC CONNECTED state, the base station may allocate a configured grant (configured grant, CG) resource to the UE. When the UE has a data transmission requirement, the UE may send uplink data to the base station by using the CG resource. In some embodiments, the base station may configure the CG resource for the UE through an RRC message, and configuration information may include a time-frequency position and a periodicity. Compared with a manner of dynamic scheduling of a transmission resource, this manner of data transmission by using the CG resource can reduce signaling overheads and a transmission delay.

When there is no uplink resource but there is uplink data to be sent to the base station, the UE in RRC CONNECTED state may trigger reporting of a buffer status report (buffer status report, BSR), to request the base station to schedule an uplink resource. The BSR may indicate an amount of currently to-be-transmitted data in a data buffer (buffer) of the UE. The data amount may be different at different moments. For example, when the UE is a smartphone, the user may send a message to another user through a social application installed on the UE. However, types and quantities of messages sent by the user at different moments may be different. Sometimes, the sent message may be only a text message, and sometimes, the sent message may include a plurality of videos. Therefore, sizes of BSRs sent by the UE to the base station at different moments may also be different. A resource used by the UE to send the BSR to the base station (BSR resource for short) may be dynamically scheduled by the base station to the UE.

When the UE is in RRC IDLE state, no RRC connection is set up between the UE and the base station. In some embodiments, when the UE is in RRC IDLE state, the UE may select a public land mobile network (public land mobile network, PLMN), the UE may receive system information broadcast by the base station, cell reselection (cell reselection) may occur on the UE, the UE may perform called paging (Paging) initiated by the SGC for downlink transmission, the UE may perform discontinuous reception (discontinuous reception, DRX) configured by a NAS stratum for core network paging, and the like.

An RRC INACTIVE state is a newly added RRC state in NR. In some embodiments, for UE that does not frequently perform data transmission, the base station usually keeps the UE in RRC INACTIVE state. In some embodiments, when the UE is in RRC INACTIVE state, the UE may select a PLMN, the UE may receive system information broadcast by the base station, and cell reselection may occur on the UE. The NG-RAN initiates called paging (Paging), and the NG-RAN manages a RAN-based notification area (RAN-based Notification Area, RNA). For example, the UE triggers an RNA update (RNA update, RNAU), to notify the base station of an RNA in which the UE is currently located, and the NG-RAN configures DRX that is for RAN paging. User plane and control plane connections of the UE may be set up between the SGC and the NG-RAN. The NG-RAN and the UE may retain the UE context of the AS stratum, and the NG-RAN may obtain the RNA in which the UE is located. In some embodiments, after the UE and the base station set up the RRC connection, the UE enters the RRC CONNECTED state. If the UE in RRC CONNECTED state does not need to perform data transmission with the base station within a preset time period, the base station may indicate the UE to enter the RRC INACTIVE state. For example, the base station may send, to the UE, an RRC release with suspend indication (RRCRelease with suspend indication) message. After receiving the RRCRelease with suspend indication message, the UE retains a context of the UE, and enters the RRC INACTIVE state.

The foregoing three states at the RRC layer may be mutually switched. As shown in FIG. 4, in some embodiments, when the UE is in RRC IDLE state or RRC INACTIVE state (which may be collectively referred to as a non-RRC connected state), if data transmission needs to be performed, an RRC connection setup procedure or an RRC connection resume procedure may be performed. For example, the UE in RRC IDLE state may send an RRC setup request (RRCSetupRequest) message to the base station, and then receive an RRC setup (RRCSetup) message sent by the base station. After receiving the RRCSetup message, the UE may set up the RRC connection to the base station, and enter the RRC CONNECTED state. For example, the UE in RRC INACTIVE state may send an RRCResumeRequest message to the base station, and then receive an RRC resume (RRCResume) message sent by the base station. After receiving the RRCResume message, the UE may enter the RRC CONNECTED state. In some other embodiments, when the UE is in non-RRC connected state, the UE may also perform an RRC connection setup procedure or an RRC connection resume procedure in response to a paging message of the base station. For example, when there is data of which transmission is performed with the UE, the core network may indicate the base station to send the paging message to the UE.

In some embodiments, the UE may enter the RRC INACTIVE state or the RRC IDLE state from the RRC CONNECTED state based on an indication of the base station. In some embodiments, when the UE does not need to perform data transmission subsequently, the base station may release the UE, so that the UE enters the RRC INACTIVE state or the RRC IDLE state. Specific examples are as follows.

Example 1: The UE enters the RRC INACTIVE state from the RRC CONNECTED state based on the indication of the base station. Specifically, the base station may send, to the UE, a release with suspend indication message, for example, the RRCRelease with suspend indication message, so that the UE enters the RRC INACTIVE state. In this case, the RRC connection between the UE and the base station is suspended, but at least one RAN node reserves the UE context of the UE.

Example 2: The UE enters the RRC IDLE state from the RRC CONNECTED state based on the indication of the base station. Specifically, the base station may send a release message, for example, the RRC release (RRCRelease) message, to the UE, so that the UE enters the RRC IDLE state. In this case, the RRC connection between the UE and the base station is stopped, and the RAN node deletes the UE context of the UE.

In some embodiments, the UE may alternatively enter the RRC IDLE state from the RRC INACTIVE state based on an indication of the base station. For example, after the UE in RRC INACTIVE state sends an RRC connection resume request, the base station may release the UE, so that the UE enters the RRC IDLE state. It may be understood that, compared with a speed of entering the RRC CONNECTED state from the RRC IDLE state, a speed at which the UE enters the RRC CONNECTED state from the RRC INACTIVE state is faster.

In some embodiments, if the UE in RRC IDLE state or RRC INACTIVE state needs to perform data transmission, the UE may perform an RRC connection setup procedure or an RRC connection resume procedure, to request to enter the RRC CONNECTED state to perform data transmission. If the UE in RRC IDLE state or RRC INACTIVE state does not have a resource for sending the RRCSetupRequest message or the RRCResumeRequest message, the UE needs to initiate a random access (random access, RA) procedure. The following describes RA by using an example.

In some embodiments, the UE may obtain an RA configuration of a current cell from the system information broadcast by the base station. For example, the configuration includes an available random access preamble (random access preamble) and an RA resource for sending the random access preamble. For example, the RA resource for sending the random access preamble is a time-frequency resource used by the UE to send the random access preamble, and may also be referred to as a random access channel(s) occasion (random access channel(s) occasion, RO). In some embodiments, the RA may include four-step random access (4-step RA for short) and two-step random access (2-step RA for short). The base station may broadcast, in the system message, an RA configuration corresponding to the 4-step RA and an RA configuration corresponding to the 2-step RA, or may broadcast, in the system message, only an RA configuration corresponding to the 4-step RA, or may broadcast, in the system message, only an RA configuration corresponding to the 2-step RA.

In some embodiments, the base station may broadcast, in the system message, the RA configuration corresponding to the 4-step RA and the RA configuration corresponding to the 2-step RA. When the UE is not configured with a contention free random access (contention free random access, CFRA) resource, the UE may determine, based on relative values of currently measured reference signal received power (reference signal received power, RSRP) and a preset RSRP threshold, to initiate the 4-step RA or the 2-step RA. For example, when the currently measured RSRP is greater than or equal to the preset RSRP threshold, the UE may initiate the 2-step RA. When the currently measured RSRP is less than the preset RSRP threshold, the UE may initiate the 4-step RA.

A message sent by the UE to the base station in step 3 of the 4-step RA may be referred to as a message 3 (msg3 for short). A message sent by the UE to the base station in step 1 of the 2-step RA may be referred to as a message A (msgA for short). In some embodiments, the msg3 or the msgA may include an RRC message. The RRC message may be different when the UE is in different RRC states and in different service scenarios. For example, when the UE in RRC INACTIVE state has data to be sent to the base station, the msg3 sent by the UE to the base station may include an RRCResumeRequest message, to request to resume a suspended RRC connection and enter the RRC CONNECTED state to perform data transmission with the base station.

It may be understood that, generally, when the UE in non-RRC connected state has uplink data to be sent to the base station, or receives a paging (Paging) message sent by the base station, where the paging message is used by the base station to indicate that there is downlink data to be sent to the UE, the UE needs to set up an RRC connection again or resume the RRC connection and enter the RRC CONNECTED state, and then performs data transmission with the base station in RRC CONNECTED state. However, the foregoing method is relatively applicable to a case in which there is a large amount of data of transmission between the UE and the base station. If a data packet in transmission is small, this type of data packet may be referred to as small data (small data), and signaling required in a state switching procedure of the UE is even greater than the small data, causing unnecessary power consumption and signaling overheads of the UE. Therefore, it is necessary to perform transmission of the small data with the base station when the UE is in non-RRC connected state. For example, when the UE in RRC INACTIVE state has a requirement for transmission of uplink small data, the UE may perform transmission of the uplink small data with the base station.

In embodiments of this application, the small data may include but is not limited to a data packet whose data amount is less than a preset threshold (such as a transport block size indicated by the base station), a data packet whose data label is small data, a data packet whose data type belongs to small data, and the like. A data packet of non-small data may be referred to as large data, and may include but is not limited to a data packet whose data amount is greater than or equal to a preset threshold, a data packet whose data label is large data, a data packet whose data type belongs to large data, and the like. The data label and/or the data type may be jointly negotiated by the UE and a network device. For example, the data label may include large data and small data. For example, data whose data type is a heartbeat packet is small data, and data whose data type is a file, video, or audio is large data. For example, the small data is an instant messaging message of an application (application, APP) of the UE, a heartbeat packet of the APP, a push message of the APP, or the like; the small data is periodic data of a wearable device, or the like; the small data is service data of an internet of things (internet of things, IoT) device; or the like.

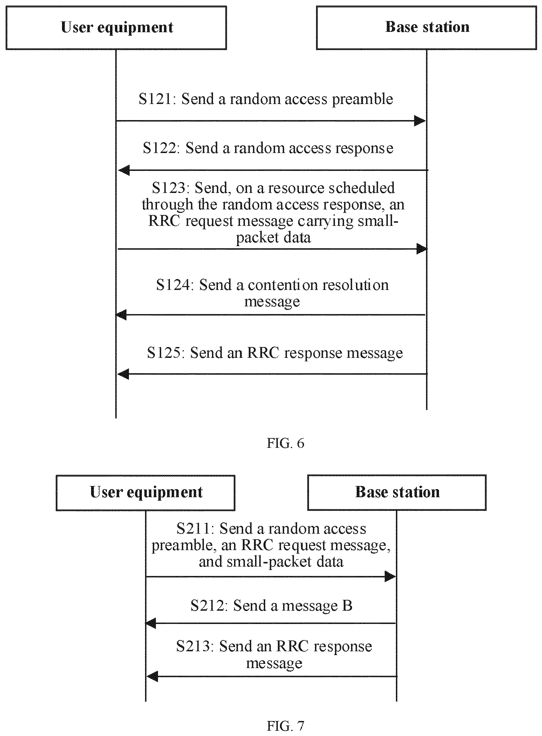

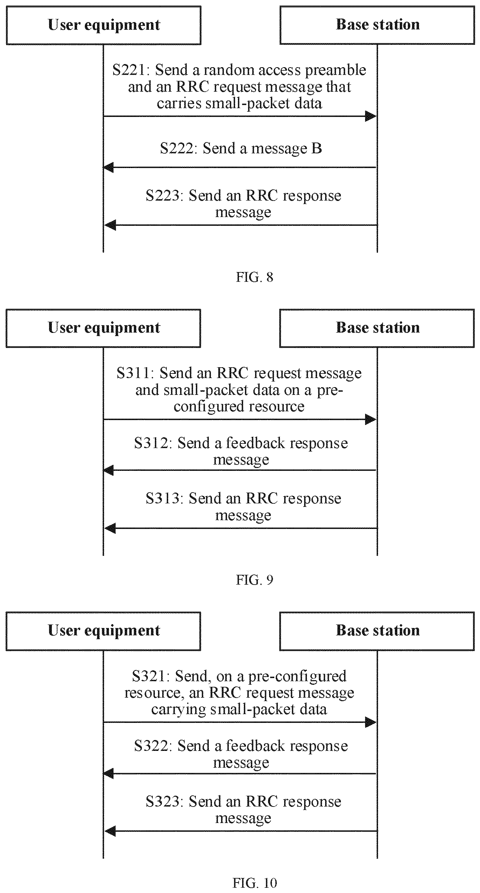

In some embodiments, that the UE in non-RRC connected state performs transmission of the small data with the base station may include: The UE performs transmission of the small data in an RA procedure instead of performing transmission of the small data after the UE enters the RRC CONNECTED state. The foregoing transmission procedure may be referred to as RA-based small data transmission (small data transmission, SDT) (RA-SDT for short). In some embodiments, the RA may include the 4-step RA and the 2-step RA, and the SDT may also include SDT based on the 4-step RA (4-step SDT for short) and SDT based on the 2-step RA (2-step SDT for short). For an example of a procedure of the 4-step SDT, refer to FIG. 5 and FIG. 6. For an example of a procedure of the 2-step SDT, refer to FIG. 7 and FIG. 8. An implementation of the RA-SDT is similar to that of the RA. For example, the UE may obtain a configuration of the RA-SDT from the system information broadcast by the base station, and the UE may determine, based on the relative values of the currently measured RSRP and the preset RSRP threshold, to initiate the 4-step SDT or the 2-step SDT.

In some other embodiments, that the UE in non-RRC connected state performs transmission of the small data with the base station may further include: The UE performs transmission of the small data through a pre-allocated CG resource or a preconfigured uplink resource (preconfigured uplink resource, PUR), instead of first entering the RRC CONNECTED state and then performing transmission of the small data. The foregoing transmission procedure may be referred to as CG-based SDT (CG-SDT for short). For specific procedure examples, refer to FIG. 9 and FIG. 10.

In some embodiments, the SDT has a plurality of different application scenarios, and SDT of different implementations, such as the RA-SDT or the CG-SDT, may be used based on the application scenarios. Specific examples are as follows.

Example 1: In the CG-SDT, a resource (for example, the CG resource or the PUR) indicated by a configuration of the CG-SDT is delivered by the base station to the UE through dedicated control signaling. Therefore, the configuration of the CG-SDT is applicable to UE that is in a cell covered by the base station, and a configuration, of the CG-SDT, provided in one cell cannot be reused by UE that is in another cell. If the UE moves to coverage of another network device, a resource indicated by the configuration of the CG-SDT cannot be used. Such a feature may be applied to, for example, the following scenario: For an IoT application, mobility of the UE is limited, generally all connections are set up in an identical cell to send data, and the cell is rarely changed, so that the UE in the IoT field may preferentially use the CG-SDT.

Example 2: An RA configuration related to a configuration of the RA-SDT may be provided by the system information sent by the base station. Each time the UE performs selection to a new cell, the UE may read and apply the configuration broadcast by the system information. Such a feature may be applied to, for example, the following scenario: For an application such as an instant messaging message of a smartphone, mobility of the UE is relatively strong, and the UE may move from coverage of one base station to coverage of another base station. If the UE moves from coverage of a base station A to coverage of a base station B, and the UE performs, in the coverage of the base station B, SDT by using a resource indicated by a configuration that is of the CG-SDT and that is sent by the base station A before the movement, data transmission cannot be performed. Because a resource, for sending a random access preamble, in the RA-SDT is broadcast by the base station in real time, UE with high mobility may preferentially use the RA-SDT.

Certainly, whether the UE uses the CG-SDT or the RA-SDT may also be not limited by a scenario, and a manner used to perform the SDT may be determined based on implementation of the UE.

For example, because a resource for performing the CG-SDT is specially configured by the base station for the UE, a success rate of performing the CG-SDT by the UE is high. A random access resource of the RA-SDT is broadcast by the network device, and all UEs that can receive the broadcast message may initiate the RA-SDT on the random access resource. A plurality of UEs contend for a resource, which may cause a contention failure. Therefore, a success rate of the RA-SDT is not higher than the success rate of the CG-SDT, and the CG-SDT may be more effective than the RA-SDT. Generally, the UE preferentially selects the CG-SDT, and the UE also needs to meet a condition to select the CG-SDT. If the condition is not met, the UE may select the RA-SDT. For example, it is determined whether the resource indicated by the configuration of the CG-SDT exists in coverage of a normal uplink (normal uplink, NUL) carrier or a supplementary uplink (supplementary uplink, SUL) carrier on which the UE is currently located. When the resource indicated by the configuration of the CG-SDT exists, and there is a valid resource in the resource indicated by the configuration of the CG-SDT, the UE may select the CG-SDT; otherwise, the UE selects the RA-SDT.

It may be understood that, the base station may first configure, for the UE, a DRB used to carry data, and the UE can perform data transmission only after resuming the context (including the DRB). In some embodiments, the DRB configured by the base station for the UE may include a DRB used to carry small data (SDT DRB for short) and a DRB used to carry large data (non-SDT DRB (non-SDT DRB) for short). The UE can initiate the SDT only when the small data carried by the SDT DRB arrives. If the large data carried by the non-SDT DRB arrives, the UE cannot initiate the SDT. When the UE initiates the SDT, the UE context needs to be resumed, and may include the SDT DRB.

In some embodiments, a status of the SDT may be determined based on a status of a first timer. The first timer may be represented as T3XX, where X is a non-negative integer less than 10. The first timer may be referred to as an SDT failure detection timer (SDT failure detection timer), and the first timer may be a timer at the RRC layer.

In some embodiments, when initiating an RRC connection resume procedure that is for the SDT, the UE may start the first timer. In some embodiments, when the UE initiates the RRC connection resume procedure that is for the SDT, the UE initializes the RRC connection resume procedure that is for the SDT, and may start the first timer. In some other embodiments, when the UE initiates the RRC connection resume procedure that is for the SDT, the UE may start the first timer when sending, to the base station, an RRC request message for initiating the RRC connection resume procedure that is for the SDT. In some embodiments, a condition for starting the first timer includes: initializing the RRC connection resume procedure that is for the SDT. In some other embodiments, a condition for starting the first timer includes: sending the RRC request message for initiating the RRC connection resume procedure that is for the SDT. For example, the RRC request message is an RRC request message in the msg3 or the msgAthat is sent by the UE to the base station based on the RA-SDT. For another example, the RRC request message is an RRC request message sent by the UE to the base station based on the CG-SDT.

In some embodiments, the UE may stop the first timer when the UE receives an RRC response message or when cell reselection is performed on the UE. In some embodiments, a condition for stopping the first timer may include that the RRC response message is received or the cell reselection occurs. The RRC response message is, for example, an RRCResume message, an RRCSetup message, an RRCRelease message, an RRCRelease with suspend indication message, an RRC reject (RRCReject) message, or another RRC message that has an identical function but is not standardized in the 3rd Generation Partnership Project (3rd generation partnership project, 3GPP). When the UE receives the RRCRelease message, the RRCRelease with suspend indication message, or another RRC message that has an identical function but is not standardized in the 3GPP, the UE may consider that the SDT succeeds, and stop the first timer. When the UE receives the RRCResume message, the RRCSetup message, or another RRC message that has an identical function but is not standardized in the 3GPP, the UE may consider that the SDT succeeds, and stop the first timer, or the UE may consider that the SDT succeeds, continue to perform data transmission after the UE enters the RRC CONNECTED state, and stop the first timer. When the UE receives the RRCReject message or another RRC message that has an identical function but is not standardized in the 3GPP, the UE may consider that the SDT fails, and stop the first timer.

In some embodiments, if the UE does not receive any response message, for example, a contention resolution (contention resolution) message, the RRC response message, or another response message, sent by the base station in a period from time when the first timer is started to time when the first timer expires, the UE may consider that the SDT fails and automatically end the SDT. It may be understood that, the first timer may be used to avoid a case in which the base station does not respond to the UE for long time after the UE sends a request message or data to the base station.

The following describes an example of an SDT transmission procedure.

FIG. 5 is an example of a schematic flowchart of a 4-step SDT procedure on a user plane. The procedure shown in FIG. 5 may include but is not limited to the following steps.

S111: UE sends a random access preamble to a base station.

In some embodiments, the base station may send a broadcast message to the UE, where the broadcast message includes first resource configuration information, and the first resource configuration information indicates a random access resource that is for sending the random access preamble. Optionally, the first resource configuration information may specifically indicate a first random access resource that is for initiating normal random access. Optionally, the first resource configuration information may specifically indicate a second random access resource that is for sending a random access preamble in an RA-SDT procedure. The random access preamble may be generated by the UE according to a specific rule, but the base station can identify the random access preamble generated by the UE.

In some embodiments, a random access preamble sent by the UE to perform RA-SDT may be different from a random access preamble sent by the UE to initiate normal RA without performing RA-SDT. In other words, the base station may distinguish intentions of the UE by using different random access preambles. For example, the intention of the UE is to perform the RA-SDT or to initiate the RA.

In some other embodiments, a random access preamble sent by the UE to perform RA-SDT may alternatively be the same as a random access preamble sent by the UE to initiate normal RA without performing RA-SDT.

In some embodiments, if the first resource configuration information specifically indicates the first random access resource that is for initiating normal random access and the second random access resource that is for sending the random access preamble in the RA-SDT procedure, the UE may send the random access preamble on different random access resources based on different intentions. In this way, the base station may distinguish the intentions of the UE by using the different resources for receiving the random access preamble. For example, when the UE intends to initiate the RA, the UE sends the random access preamble on the first random access resource. When receiving the random access preamble through the first random access resource, the base station may determine that the intention of the UE is to initiate the RA. When the UE intends to perform the RA-SDT, the UE sends the random access preamble on the second random access resource. When receiving the random access preamble through the second random access resource, the base station may determine that the intention of the UE is to perform the RA-SDT.

In some other embodiments, a random access resource of the random access preamble sent by the UE to perform RA-SDT may alternatively be the same as a random access resource used by the UE to initiate normal RA without performing RA-SDT.

S 112: The base station sends a random access response (random access response, RAR) to the UE in response to the random access preamble.

Specifically, after sending the random access preamble to the base station, the UE may monitor a physical downlink control channel (physical downlink control channel, PDCCH) in a RAR time window, to receive the RAR sent by the base station. If the UE does not receive, in the RAR time window, the RAR sent by the base station, the UE may determine that the RA fails this time. The RAR is for scheduling an uplink grant (uplink grant, UL grant) for the UE, so that the UE may send the msg3 (including the RRC request message in S113) on the resource scheduled by the RAR.

In some embodiments, the RAR may further include at least one of a temporary cell radio network temporary identifier (temporary cell radio network temporary identifier, TC-RNTI) and a timing advance (timing advance, TA). The TA is used by the UE to learn of uplink synchronization.

S113: The UE sends uplink small data and the RRC request message to the base station on the resource allocated through the RAR.

In some embodiments, the RRC request message may carry intention information. The intention information indicates an intention of the UE to send the RRC request message. For example, the intention of the UE is to perform the RA-SDT or to initiate the RA. For example, if the random access preamble sent by the UE to initiate the RA-SDT is the same as the random access preamble used by the UE to initiate the normal RA without performing the RA-SDT, or the random access resource that is for sending the random access preamble and that is used by the UE to initiate the RA-SDT is the same as the random access resource that is for transmission of the random access preamble and that is used by the UE to initiate the normal RA without performing the RA-SDT, the RRC request message sent by the UE to perform the RA-SDT may carry the intention information, where the intention information indicates an intention of the UE to initiate the RA-SDT rather than initiate the normal RA.

In some other embodiments, the UE may send a BSR when sending the msg3 to the base station, and the base station may obtain the intention of the UE through the BSR sent by the UE. For example, the intention of the UE is to perform the RA-SDT or to initiate the RA. For example, the random access preamble sent by the UE to perform the RA-SDT is the same as the random access preamble sent by the UE to initiate the normal RA without performing the RA-SDT, or the random access resource that is for sending the random access preamble and that is used by the UE to perform the RA-SDT is the same as the random access resource that is used by the UE to initiate the normal RA without performing the RA-SDT. If the UE needs to perform the RA-SDT, the UE may send the BSR when sending the msg3 to the base station, where the BSR indicates a data amount of the small data, and the base station may learn, through the received BSR, that the intention of the UE is to initiate the RA-SDT rather than initiate the normal RA.

In some embodiments, the RRC request message in the msg3 may be different when the UE is in different RRC states and in different service scenarios. For example, the RRC request message sent by the UE in RRC IDLE state (where optionally, in this case, the UE may store a UE context such as configuration information that may include a key for encrypting the uplink small data, or the terminal may not store a context of the terminal) may include an RRC connection request (RRCConnectionRequest) message, an RRC connection resume request (RRCConnectionResumeRequest) message, an RRC early data request (RRCEarlyDataRequest) message, an RRCResumeRequest message, an RRCResumeRequest1 message, an RRCSetupRequest message, or another RRC message that has an identical function but is not standardized in the 3GPP. The RRC request message sent by the UE in RRC INACTIVE state may be an RRCConnectionRequest message, an RRCConnectionResumeRequest message, an RRCEarlyDataRequest message, an RRCResumeRequest message, an RRCResumeRequest1 message, an RRCSetupRequest message, or another RRC message that has an identical function but is not standardized in the 3GPP.

In some embodiments, the UE may send the uplink small data and the RRC request message to the base station, to initiate an RRC connection resume procedure that is for the 4-step SDT. In some embodiments, the RRC request message for initiating the RRC connection resume procedure that is for the 4-step SDT includes a resume cause (resumeCause) information element (information element, IE), and the resumeCause IE may be set to mo-data.

In some embodiments, the UE first initializes an RRC connection resume procedure that is for the SDT, and then sends the RRC request message to the base station based on the 4-step SDT. In some embodiments, the UE starts the first timer when initializing the RRC connection resume procedure that is for the SDT. In some other embodiments, the UE starts the first timer when sending the uplink small data and the RRC request message to the base station based on the 4-step SDT.

In some embodiments, the msg3 may include an identifier of the UE, for example, a unique identifier of the UE in a core network. In some embodiments, the msg3 may include related information of a base station previously connected to the UE, for example, an inactive radio network temporary identifier (inactive radio network temporary identifier, I-RNTI). In some embodiments, the msg3 may include information used for encryption and integrity protection.

In some embodiments, transmission of the uplink small data may be performed on a DTCH, and transmission of the RRC message may be performed on a CCCH. The small data and the RRC request message may be encapsulated at a MAC layer, and sent to the base station through a PHY layer.

S114: After receiving the RRC request message, the base station sends a contention resolution message to the UE.

In some embodiments, after receiving the uplink small data and the RRC request message, the base station may resume the UE context, and send the received uplink small data to the core network.

In some embodiments, the contention resolution message is actually a contention resolution identity medium access control control element (contention resolution Identity MAC control element, contention resolution Identity MAC CE), and the contention resolution Identity MAC CE may indicate, to the UE, that contention resolution succeeds. In some embodiments, the UE may determine whether a msg3 sent by the contention resolution Identity MAC CE is consistent with the msg3 sent in S113, and if the msg3s are consistent, determine that contention resolution corresponding to a current RA-SDT procedure succeeds, or determine that a current RA-SDT procedure succeeds.

S115: The base station sends an RRC response message to the UE.

In some embodiments, if the core network has downlink small data to be sent to the UE, the core network may send the downlink small data to the base station. Then, the base station may send the downlink small data to the UE together with the RRC response message. Transmission of the downlink small data may be performed on a DTCH, and the downlink small data is multiplexed, at the MAC layer, with the RRC response message of which transmission is performed on a DCCH.

In some embodiments, the UE may determine, based on the RRC response message, whether transmission of the uplink small data succeeds. Specific examples are as follows.

Example 1: The RRC response message sent by the base station is an RRC connection release (RRCConnectionRelease) message, an RRC connection resume (RRCConnectionResume) message, an RRC connection setup (RRCConnectionSetup) message, an RRCRelease message, an RRCResume message, an RRCSetup message, or another RRC message that has an identical function but is not standardized in the 3GPP. When receiving the RRC response message, the UE may determine that the SDT transmission succeeds this time, and stops the first timer.

Example 2: The RRC response message sent by the base station is an RRC connection reject (RRCConnectionReject) message, an RRCReject message, or another RRC message that has an identical function but is not standardized in the 3GPP. When receiving the RRC response message, the UE may determine that the SDT transmission fails this time, and stops the first timer.

In some embodiments, the UE may keep a current RRC state or enter another RRC state based on the RRC response message. Specific examples are as follows.

Example 1: If the core network does not have a requirement for further data transmission, the RRC response message sent by the base station is an RRC early data complete (RRCEarlyDataComplete) message, an RRCConnectionRelease message, an RRCRelease with suspend config message, an RRCRelease message, or another RRC message that has an identical function but is not standardized in the 3GPP. When receiving the RRC response message, the UE may consider that an SDT transmission procedure succeeds this time, and stops the first timer. In addition, the UE may keep a current non-RRC connected state in response to the RRC response message. Optionally, the RRC response message (for example, the RRCRelease message) may include a next hop chaining count (next hop chaining count, NCC) for encrypting the small data by the UE when the UE initiates SDT next time.

Example 2: If the core network has a requirement for further data transmission, the core network may trigger a connection setup indication procedure, and the RRC response message sent by the base station is an RRCConnectionSetup message, an RRCConnectionResume message, an RRCSetup message, an RRCResume message, or another RRC message that has an identical function but is not standardized in the 3GPP. When receiving the RRC response message, the UE may consider that an SDT transmission procedure succeeds this time, and stops the first timer. In addition, the UE may enter an RRC CONNECTED state in response to the RRC response message.

In some embodiments, if the UE does not receive the RRC response message in S115, the UE considers that transmission of the small data in S113 fails. For example, if the UE still does not receive the RRC response message when the first timer expires, the UE considers that transmission of the small data in S113 fails. If the UE receives the RRC response message in S 115, the UE considers that transmission of the small data in S113 succeeds. That is, the UE may determine, depending on whether the RRC response message is received, whether transmission of the small data in S113 succeeds.

It should be noted that whether the core network has the requirement for further data transmission does not include a requirement for sending the downlink small data by the base station in S115.

FIG. 6 is an example of a schematic flowchart of a 4-step SDT procedure on a control plane. The procedure shown in FIG. 6 may include but is not limited to the following steps.

S121: UE sends a random access preamble to a base station.

S122: The base station sends a RAR to the UE in response to the random access preamble.

Specifically, S121 and S122 are similar to S111 and S112 in FIG. 5, and details are not described again.

S123: The UE sends, to the base station on a resource allocated through the RAR, an RRC request message carrying uplink small data.

Specifically, S123 is similar to S113 in FIG. 5, and a difference lies in that the uplink small data is not sent after being encapsulated with a msg3 at a MAC layer, but is carried in the msg3 and sent. In some embodiments, the uplink small data may be carried in the msg3, and transmission of the uplink small data is performed on a CCCH. For example, the uplink small data may be carried in a NAS stratum-related IE (for example, a dedicated information NAS (dedicatedInfoNAS) IE) included in an RRCEarlyDataRequest message, and transmission of the uplink small data is performed on the CCCH.

S124: After receiving the RRC request message, the base station sends a contention resolution message to the UE.

Specifically, S124 is similar to S114 in FIG. 5, and a difference lies in that the RRC request message received by the base station includes the uplink small data. In some embodiments, the base station may send the uplink small data to a core network through the msg3 carrying the uplink small data. For example, the base station may send the uplink small data to the core network by forwarding the NAS-related IE included in the msg3.

S125: The base station sends an RRC response message to the UE.

Specifically, S125 is similar to S115 in FIG. 5, and details are not described again.

FIG. 5 and FIG. 6 are described by using an example in which S111 and/or S121 are/is performed when the UE sends the uplink small data to the base station, in other words, the UE actively initiates a small data transmission procedure. However, in specific implementation, a case further exists in which the UE passively initiates a small data transmission procedure based on an indication of the base station, for example, mobile terminated (mobile terminated, MT) EDT (MT-EDT for short) in LTE. A transmission procedure in this case is similar to the transmission procedures shown in FIG. 5 and FIG. 6, and a difference is specifically described as follows.

Before S111, when the core network has the downlink small data to be sent to the UE, the core network may send a paging message to the base station. In some embodiments, the paging message may carry data amount information of the downlink small data. In some embodiments, the base station may send a paging message to the UE, and the UE determines, based on relative values of a currently measured RSRP and a preset RSRP threshold, to initiate the 4-step SDT. For example, the base station may trigger the MT-EDT based on the paging message, and send, to the UE, a paging message carrying an MT-EDT indication, so that the UE triggers MO-EDT that is for the MT-EDT. Different from the foregoing case in which the UE actively initiates the small data transmission procedure, in S 113, the UE may send only the RRC message to the base station, and does not send the uplink small data. Optionally, the RRC message may further carry cause information of triggering the MT-EDT. Correspondingly, the base station may receive the downlink small data sent by the core network, and in S115, the base station may send the RRC response message and the downlink small data to the UE.

Similarly, before S121, when the core network has the downlink small data to be sent to the UE, the core network may send a paging message to the base station. In some embodiments, the paging message may carry data amount information of the downlink small data. In some embodiments, the base station may send a paging message to the UE, and the UE determines, based on relative values of a currently measured RSRP and a preset RSRP threshold, to initiate the 4-step SDT. Different from the foregoing case in which the UE actively initiates the small data transmission procedure, the RRC message sent by the UE to the base station in S 123 may not carry the uplink small data, and optionally, may further carry cause information of triggering the MT-EDT. Correspondingly, the base station may receive the downlink small data sent by the core network. The RRC response message sent by the base station to the UE in S125 may carry the downlink small data.

FIG. 7 is an example of a schematic flowchart of a 2-step SDT procedure on a user plane. The procedure shown in FIG. 7 may include but is not limited to the following steps.

S211: UE sends a random access preamble, an RRC request message, and uplink small data to a base station.

In some embodiments, a transmission resource for performing S211 by the UE may be obtained based on information broadcast by the base station. For example, the UE may send the random access preamble by using an RA resource broadcast by the base station, and the UE may send the RRC request message by using a PUSCH resource broadcast by the base station.

In some embodiments, the base station may distinguish intentions of the UE by using different random access preambles. In some other embodiments, the base station may distinguish intentions of the UE by using different resources for receiving random access preambles. In some other embodiments, the base station may obtain an intention of the UE based on a BSR sent by the UE. In some other embodiments, the RRC request message may carry intention information, where the intention information indicates an intention of the UE to send the RRC request message, where for example, the intention of the UE is to perform RA-SDT or initiate RA. For details, refer to examples of S111 and S 113 in FIG. 5. Details are not described again.

In some embodiments, the RRC request message in a msgA may be different when the UE is in different RRC states and in different service scenarios. For details, refer to an example of the RRC request message in the msg3 in FIG. 5. Details are not described again.

In some embodiments, the RRC request message and the uplink small data may be carried in a physical uplink shared channel (physical uplink shared channel, PUSCH) load. Transmission of the uplink small data may be performed on a DTCH, and transmission of the RRC message may be performed on a CCCH. The small data and the RRC request message may be encapsulated at a MAC layer, and sent to the base station through a PHY layer.

In some embodiments, the UE may send the uplink small data and the RRC request message to the base station, to initiate an RRC connection resume procedure that is for the 2-step SDT. In some embodiments, in the RRC request message for initiating the RRC connection resume procedure that is for the 2-step SDT, a resumeCause IE may be set to mo-data.

In some embodiments, the UE first initializes an RRC connection resume procedure that is for SDT, and then sends the RRC request message to the base station based on the 2-step SDT. In some embodiments, the UE starts a first timer when initializing an RRC connection resume procedure that is for SDT. In some other embodiments, the UE starts a first timer when sending the uplink small data and the RRC request message to the base station based on the 2-step SDT.

For descriptions of the RRC request message and the uplink small data, refer to the descriptions of the RRC request message and the uplink small data in S 113 in FIG. 5, and details are not described again.

S212: After receiving the RRC request message, the base station sends a message B to the UE.

In some embodiments, after receiving the uplink small data and the RRC request message, the base station may resume a UE context, and send the received uplink small data to a core network.

In some embodiments, the message sent by the base station to the UE in step 2 of the 2-step RA may be referred to as a message B (message B) (msgB for short). For example, the msgB includes a success RAR (successRAR) or a fallback RAR (fallbackRAR).

In some embodiments, the msgB includes the successRAR, and the successRAR includes a contention resolution field, for example, content included in a contention resolution MAC CE. After receiving the successRAR, the UE determines that contention resolution corresponding to a current RA-SDT procedure succeeds, or determines that a current RA-SDT procedure succeeds. Optionally, the contention resolution field in the successRAR may indicate, to the UE, that the contention resolution succeeds. Optionally, the UE may determine whether the contention resolution field in the successRAR is consistent with the msgA sent in S211. If the contention resolution field in the successRAR is consistent with the msgA sent in S211, the UE determines that contention resolution corresponding to the current RA-SDT procedure succeeds, or determines that the current RA-SDT procedure succeeds. In some other embodiments, the msgB includes the fallbackRAR. After receiving the fallbackRAR, the UE sends the msg3 and the uplink small data to the base station again.

S213: The base station sends an RRC response message to the UE.

In some embodiments, if the core network has downlink small data to be sent to the UE, the core network may send the downlink small data to the base station. Then, the base station may send the downlink small data to the UE together with the RRC response message.

For descriptions of the RRC response message, refer to the descriptions of the RRC response message in S115 in FIG. 5. Details are not described again.

FIG. 8 is an example of a schematic flowchart of a 2-step SDT procedure on a control plane. The procedure shown in FIG. 8 may include but is not limited to the following steps.

S221: UE sends, to the base station, a random access preamble and an RRC request message that carries uplink small data.

Specifically, S221 is similar to S211 in FIG. 7, and a difference lies in that the uplink small data is not sent together with the RRC request message in a msgA, but is carried in the RRC request message in the msgA and sent. In some embodiments, the RRC request message carrying the uplink small data may be carried in a physical uplink shared channel (physical uplink shared channel, PUSCH) load, and transmission of the RRC request message may be performed on a CCCH.

S222: After receiving the RRC request message, the base station sends a msgB to the UE.

Specifically, S222 is similar to S212 in FIG. 7, and a difference lies in that the RRC request message received by the base station includes the uplink small data. In some embodiments, the base station may send the uplink small data to a core network through the RRC request message carrying the uplink small data. For example, the base station may send the uplink small data to the core network by forwarding an RRCResumeRequest message carrying the uplink small data.

S223: The base station sends an RRC response message to the UE.

Specifically, S223 is similar to S213 in FIG. 7, and details are not described again.

FIG. 7 and FIG. 8 are described by using an example in which S211 and/or S221 are/is performed when the UE sends the uplink small data to the base station, in other words, the UE actively initiates a small data transmission procedure. However, in specific implementation, a case further exists in which the UE passively initiates a small data transmission procedure based on an indication of the base station. A transmission procedure in this case is similar to the transmission procedures shown in FIG. 7 and FIG. 8, and a difference is specifically described as follows.

Before S211, when the core network has the downlink small data to be sent to the UE, the core network may send a paging message to the base station. In some embodiments, the paging message may carry data amount information of the downlink small data. In some embodiments, the base station may send a paging message to the UE, and the UE determines, based on relative values of a currently measured RSRP and a preset RSRP threshold, to initiate the 2-step SDT. For example, the base station may trigger MT-EDT based on the paging message, and send, to the UE, a paging message carrying an MT-EDT indication, so that the UE triggers MO-EDT that is for the MT-EDT. Different from the foregoing case in which the UE actively initiates the small data transmission procedure, in S211, the UE may send only the random access preamble and the RRC request message to the base station, and does not send the uplink small data. Optionally, the RRC request message may further carry cause information of triggering the MT-EDT. Correspondingly, the base station may receive the downlink small data sent by the core network, and in S213, the base station may send the RRC response message and the downlink small data to the UE.

Similarly, before S221, when the core network has the downlink small data to be sent to the UE, the core network may send a paging message to the base station. In some embodiments, the paging message may carry data amount information of the downlink small data. In some embodiments, the base station may send a paging message to the UE, and the UE determines, based on relative values of a currently measured RSRP and a preset RSRP threshold, to initiate the 2-step SDT. Different from the foregoing case in which the UE actively initiates the small data transmission procedure, the RRC message sent by the UE to the base station in S221 may not carry the uplink small data, and optionally, may further carry cause information of triggering the MT-EDT. Correspondingly, the base station may receive the downlink small data sent by the core network. The RRC response message sent by the base station to the UE in S223 may carry the downlink small data.

This is not limited to the foregoing examples. In some other embodiments, the base station may also send the msgB and the RRC response message together to the UE.

In some embodiments, after initiating RA-SDT, the UE cannot send the msg3 or the msgA once to complete transmission of the small data, and the UE may complete transmission of the small data subsequently through subsequent transmission (subsequent transmission). The subsequent transmission may be performed after the UE receives the contention resolution and before the base station sends the RRC response message to the UE, for example, between S114 and S115 in FIG. 5 and between S212 and S213 in FIG. 7. Specific examples are as follows.

Example 1: The RA-SDT currently initiated by the UE is for transmission of one piece of small data (for example, one instant messaging message). When the UE initiates 4-step SDT, a size of a UL grant indicated by the base station in a RAR is less than a sum of sizes of resources for transmission of the small data and the RRC request message, or when the UE initiates the 2-step SDT, a size of a transmission resource obtained by the UE from a broadcast message is less than a sum of sizes of resources for transmission of the random access preamble, the small data, and the RRC request message. In this case, the UE may first send some data of the small data through the msg3 or the msgA, and then perform transmission of remaining data of the small data through the subsequent transmission. For example, after sending the contention resolution to the UE, the base station may dynamically schedule an uplink resource for the UE to perform the subsequent transmission.

Example 2: The RA-SDT currently initiated by the UE is for transmission of a plurality of pieces of small data. After the small data arrives, the UE may initiate 4-step SDT or the 2-step SDT, and perform transmission of the small data through the msg3 or the msgA. However, in the SDT procedure this time, the UE obtains new small data, and the UE may perform transmission of the new small data through the subsequent transmission. For example, after sending the contention resolution to the UE, the base station may dynamically schedule an uplink resource for the UE to perform the subsequent transmission.

FIG. 9 is an example of a schematic flowchart of a CG-SDT procedure on a user plane. The procedure shown in FIG. 9 may include but is not limited to the following steps.

S311: UE sends an RRC request message and uplink small data to a base station on a pre-configured resource.

For example, the preconfigured resource is a configured grant resource type 1 (configured grant type 1, CG Type 1) or a PUR. The CG Type 1 may be an uplink resource directly configured by an RRC layer, and may include but is not limited to a time-frequency resource position and a resource periodicity of the uplink resource.

In some embodiments, when both the base station and the UE support CG-SDT, and the UE meets a condition for using the CG-SDT, the UE may perform S311 without performing RA. The condition for using the CG-SDT includes, for example, that the UE is in non-RRC connected state, the UE has a requirement for transmission of the uplink small data, the UE has the preconfigured resource, the UE meets an RSRP condition, and the UE has a valid TA.

In some embodiments, the condition for the UE to determine to use the CG-SDT includes at least one of the following conditions.

Condition 1: A TAT runs, to be specific, the TA of the UE is valid, and the UE and the base station are in uplink synchronization state, which may represent that the CG-SDT is valid; otherwise, the CG-SDT is invalid.

Condition 2: When the TAT runs, a current RSRP of the UE is greater than a preset first RSRP threshold (RSRP 1 for short), which may represent that the CG-SDT is valid. Optionally, the RSRP 1 may be an RSRP at which the UE can initiate SDT transmission. To be specific, if the current RSRP of the UE is greater than the preset RSRP 1, it indicates that the UE is close to the base station and channel quality is good. If the CG-SDT is performed, a success rate is high, and the CG-SDT is valid. If the current RSRP of the UE is less than or equal to the preset RSRP 1, it indicates that the UE is far away from the base station and channel quality is poor. If the CG-SDT is performed, the success rate is low. The RSRP 1 may be configured by the base station for both the CG-SDT and RA-SDT.

Condition 3: In a preset time period in which the TA is valid last time, an increment or a decrement of an RSRP of the UE is less than or equal to a preset second RSRP threshold (RSRP 2 for short), which may represent that the CG-SDT is valid. That is, whether the UE moves may be determined based on the increment or decrement of the RSRP of the UE. If the increment or decrement of the RSRP is greater than or equal to the RSRP 2, it indicates that the UE moves or a moving distance is long compared with a UE position that is in the time period in which the TA is valid last time. If the CG-SDT is performed, a success rate is low, and the CG-SDT is invalid. If the increment or decrement of the RSRP is less than the RSRP 2, it indicates that the UE does not move or a moving distance is small compared with a UE position that is in the time period in which the TA is valid last time. If the CG-SDT is performed, a success rate is high, and the CG-SDT is valid.

Condition 4: If the base station configures CG-SDT on an SUL and/or an NUL, the UE needs to compare current RSRP with a third RSRP threshold (RSRP 3 for short) preset by the base station, to determine whether the CG-SDT configured on the SUL is valid or the CG-SDT configured on the NUL is valid. Optionally, assuming that the CG-SDT is configured on both the SUL and the NUL, the UE compares the current RSRP with the RSRP 3. If the current RSRP is less than the RSRP 3, the UE selects the CG-SDT that is on the SUL. If the current RSRP is greater than or equal to the RSRP 3, the UE selects the CG-SDT that is on the NUL. To be specific, when the base station configures the CG-SDT on both the SUL and the NUL, if the current RSRP of the UE is less than the RSRP 3, it indicates that the UE is far away from the base station, and the CG-SDT configured on the SUL needs to be used. That is, the CG-SDT on the SUL is valid, and the CG-SDT on the NUL is invalid. If the current RSRP of the UE is greater than or equal to the RSRP 3, it indicates that the UE is relatively close to the base station, and the CG-SDT configured on the NUL needs to be used. That is, the CG-SDT on the NUL is valid, and the CG-SDT on the SUL is invalid. Optionally, assuming that the base station configures the CG-SDT only on the SUL, the UE compares the current RSRP with the RSRP 3. If the current RSRP is less than the RSRP 3, the UE selects the CG-SDT that is on the SUL. In this case, the CG-SDT is valid. If the current RSRP is greater than or equal to the RSRP 3, the UE cannot use the CG-SDT, in other words, the CG-SDT on the SUL is invalid. That is, the base station configures the CG-SDT that is on the SUL; and when the UE is far away from the base station, the UE can use the CG-SDT that is on the SUL; otherwise, the CG-SDT on the SUL is invalid. Optionally, assuming that the base station configures the CG-SDT only on the NUL, the UE compares the current RSRP with the RSRP 3. If the current RSRP is less than the RSRP 3, the UE cannot use the CG-SDT. If the current RSRP is greater than or equal to the RSRP 3, the UE selects the CG-SDT that is on the NUL, in other words, the CG-SDT on the NUL is valid. That is, the base station configures the CG-SDT that is on the NUL; and when the UE is close to the base station, the UE can use the CG-SDT that is on the NUL; otherwise, the CG-SDT on the NUL is invalid.

Condition 5: The UE is in coverage of the base station, and the base station has configured, for the UE, a CG resource that is for the CG-SDT.

In some embodiments, before S311, the UE may further request the base station to configure the pre-configured resource used to initiate the CG-SDT. For example, the UE in RRC CONNECTED state sends a CG-SDT resource request message to the base station. The CG-SDT resource request message is used to request the base station to configure the CG-SDT. For example, in LTE, the UE sends PUR configuration request information (a PURConfigurationRequest message) to the base station.

Optionally, the UE in RRC CONNECTED state may send the CG-SDT resource request message to the base station at any moment. Optionally, the UE in RRC CONNECTED state may determine that there may be small data in the future, and may send the CG-SDT resource request message to the base station. Optionally, the UE is in RRC CONNECTED state, and the UE does not need to perform data transmission with the base station within a preset time period. The UE determines that the UE may be about to enter a non-RRC connected state. To perform transmission of small data when the UE is in non-RRC connected state, the UE may send the CG-SDT resource request message to the base station.

In some embodiments, after the base station receives the configuration request information (for example, the CG-SDT resource request message or the PURConfigurationRequest message), when the base station indicates the UE to switch from the RRC CONNECTED state to the non-RRC connected state, an RRC response message sent by the base station to the UE may carry detailed configuration information of the CG-SDT. For example, when the base station indicates the UE to switch from the RRC CONNECTED state to an RRC INACTIVE state, the RRC response message is an RRCRelease message, and the RRCRelease message may carry detailed configuration information of the CG resource. For example, when the base station indicates the UE to switch from the RRC CONNECTED state to an RRC IDLE state, the RRC response message is an RRCRelease message, and the RRCRelease message may carry detailed configuration information of the PUR.

This is not limited to the foregoing enumerated cases. In some other embodiments, after configuring the CG-SDT for the UE, the base station may send, to the UE, an RRC response message carrying release indication information, so as to release the configured CG-SDT. For example, the RRCRelease message may carry release indication information of the CG resource. For example, the RRCConnectionRelease message may carry release indication information of the PUR.

In some other embodiments, the UE may not send the CG-SDT resource request message to the network device, and the network device may directly configure the CG-SDT resource for the UE. For example, the network device may configure the CG-SDT resource for the UE based on a historical communication service situation of the UE.

In some embodiments, the UE may send the uplink small data and the RRC request message to the base station, to initiate an RRC connection resume procedure that is for the CG-SDT. In some embodiments, in the RRC request message for initiating the RRC connection resume procedure that is for the CG-SDT, a resumeCause IE may be set to mo-data.

In some embodiments, the UE first initializes an RRC connection resume procedure that is for the SDT, and then sends the RRC request message to the base station based on the CG-SDT. In some embodiments, the UE starts a first timer when initializing an RRC connection resume procedure that is for the SDT. In some other embodiments, the UE starts a first timer when sending the uplink small data and the RRC request message to the base station based on the CG-SDT.

This is not limited to the foregoing example cases. In some other embodiments, the UE may send only the small data in a CG-SDT procedure. For example, if a resource indicated by a CG-SDT configuration is a dedicated resource configured by the network device for the UE and is not a shared resource, the UE may send, in the CG-SDT procedure, only the small data in the resource indicated by the CG-SDT configuration. In this way, the network device may identify, based on the resource for receiving the small data, the UE that sends the small data. For another example, if a resource indicated by a CG-SDT configuration is a shared resource configured by the network device for a plurality of UEs, the UE may send, in an SDT procedure, the small data and the RRC request message on the resource indicated by the CG-SDT configuration. In this way, the network device may identify the UE by using the RRC message.

For descriptions of the RRC request message and the uplink small data, refer to the descriptions of the RRC request message and the uplink small data in S 113 in FIG. 5, and details are not described again.

S312: The base station sends a feedback response message to the UE.

In some embodiments, the base station sends the feedback response message to the UE in response to the RRC request message sent by the UE. In some embodiments, the feedback response message indicates that transmission of the RRC request message succeeds. In some embodiments, the feedback response message indicates that transmission of the RRC request message and the uplink small data sent together with the RRC request message succeeds. In some embodiments, the feedback response message indicates that transmission of the uplink small data succeeds.

In some embodiments, the feedback response message is a layer 1 acknowledgment (Layer 1 Acknowledgement, Layer 1 Ack) message, namely, a physical layer ACK.

In some embodiments, the feedback response message is downlink feedback information (downlink feedback information, DFI), namely, CG-DFI.

In some embodiments, the feedback response message is a MAC CE at a MAC layer.

In some embodiments, the feedback response message is an RRC message at an RRC layer.

S313: The base station sends the RRC response message to the UE.

In some embodiments, if a core network has downlink small data to be sent to the UE, the core network may send the downlink small data to the base station. Then, the base station may send the downlink small data to the UE together with the RRC response message.

For descriptions of the RRC response message, refer to the descriptions of the RRC response message in S115 in FIG. 5. Details are not described again.

In some embodiments, the RRC response message may include the CG-SDT configuration. For example, the CG-SDT configuration in S311 is used by the UE to perform transmission of the small data in S311, and the CG-SDT configuration indicated by the RRC response message in S313 is used by the UE to perform transmission of small data next time.

In some embodiments, when the feedback response message in S312 is the RRC message at the RRC layer, the feedback response message in S312 and the RRC response message in S313 may be an identical message. That is, the feedback response message may be the RRC response message, in other words, S312 and S313 are an identical step.

FIG. 10 is an example of a schematic flowchart of a CG-SDT procedure on a control plane. The procedure shown in FIG. 10 may include but is not limited to the following steps.

S321: UE sends, to a base station on a pre-configured resource, an RRC request message carrying uplink small data.

Specifically, S321 is similar to S311 in FIG. 9, and a difference lies in that the uplink small data is not sent together with the RRC request message, but is carried in the RRC request message and sent.

S322: The base station sends a feedback response message to the UE.

S323: The base station sends an RRC response message to the UE.

Specifically, S322 and S323 are similar to S312 and S313 in FIG. 9, and details are not described again.

FIG. 9 and FIG. 10 are described by using an example in which S311 and/or S321 are/is performed when the UE sends the uplink small data to the base station, in other words, the UE actively initiates a small data transmission procedure. However, in specific implementation, a case further exists in which the UE passively initiates a small data transmission procedure based on an indication of the base station. A transmission procedure in this case is similar to the transmission procedures shown in FIG. 9 and FIG. 10, and a difference is specifically described as follows.

Before S311, when the core network has the downlink small data to be sent to the UE, the core network may send a paging message to the base station. In some embodiments, the paging message may carry data amount information of the downlink small data. In some embodiments, the base station may send a paging message to the UE, so that the UE initiates the CG-SDT. Different from the foregoing case in which the UE actively initiates the small data transmission procedure, in S311, the UE may send only the RRC request message to the base station, and does not send the uplink small data. Optionally, the RRC request message may further carry cause information of triggering MT-EDT. Correspondingly, the base station may receive the downlink small data sent by the core network, and in S313, the base station may send the RRC response message and the downlink small data to the UE.

Similarly, before S321, when the core network has the downlink small data to be sent to the UE, the core network may send a paging message to the base station. In some embodiments, the paging message may carry data amount information of the downlink small data. In some embodiments, the base station may send a paging message to the UE, so that the UE initiates the CG-SDT. Different from the foregoing case in which the UE actively initiates the small data transmission procedure, the RRC message sent by the UE to the base station in S321 may not carry the uplink small data, and optionally, may further carry cause information of triggering MT-EDT. Correspondingly, the base station may receive the downlink small data sent by the core network. The RRC response message sent by the base station to the UE in S323 may carry the downlink small data.

It may be understood that an NG-RAN manages an RNA of the UE in RRC INACTIVE state, and the NG-RAN may obtain the RNA in which the UE is located.

In some embodiments, one RNA may be configured by a previous serving base station for the UE in RRC INACTIVE state. One RNA may cover one or more cells, and the RNA may be included in a core network registration area. In some embodiments, there is an Xn connection between base stations in an identical RNA.

In some embodiments, the base station may configure RNA-related information, for example, a cell list or a RAN area (RAN area) list, for the UE based on a RAN notification area information (RAN-NotificationArealnfo) IE in the RRC response message (for example, an RRCRelease message) sent to the UE.

The following describes two RNA configuration cases by using examples.

Case 1: The base station configures the cell list for the UE. In some embodiments, the base station explicitly indicates the cell list to the UE, where one or more cells included in the cell list constitute the RNA configured by the base station for the UE.

Case 2: The base station configures the RAN area list for the UE. In some embodiments, one or more RAN areas included in the RAN area list constitute the RNA configured by the base station for the UE. In some embodiments, the base station configures a RAN area identifier (identifier, ID) (RAN area ID) for the UE. Each RAN area is a subset of a core network (core network) tracking area (CN tracking area) or is equal to the CN tracking area. Each RAN area is identified by a RAN area ID, and each RAN area includes a tracking area code (tracking area code, TAC). The TAC identifies a tracking area to which the RAN area belongs. In some embodiments, each RAN area may include a RAN area code (RAN area code), and the RAN area code may be used to identify an area of the RAN area in a range of the tracking area. In some embodiments, each cell and a corresponding base station may broadcast one or more RAN area IDs in system information.

It may be understood that the UE in RRC INACTIVE state may trigger an RNA update (RNA update, RNAU). Optionally, after being configured with the RNA, the UE may trigger the RNAU, to notify the network device of a current RNA status of the terminal, for example, a mobility-related state of the UE, such as an RNA in which the terminal is currently located, whether the terminal is in the RNA configured by the base station for the UE, or a cell in which the UE is currently located.

The following describes two cases of triggering the RNAU by using examples.

Case 1: The UE may periodically trigger the RNAU, and triggering of the RNAU may be controlled by a second timer. For example, the second timer is T380 specified in 38.321 in the 3GPP protocol, and the T380 expires to trigger the RNAU. In some embodiments, when sending a first RRC response message to the UE, the base station configures the second timer for the UE. When the UE receives the first RRC response message, the UE starts the second timer. In some embodiments, a start condition of the second timer includes that the UE receives the first RRC response message, where the first RRC response message is, for example, an RRCRelease message, an RRC release with suspend configuration (RRCRelease with suspend config) message, or another RRC message that has an identical function but is not standardized in the 3GPP. In some embodiments, when the second timer expires, the UE triggers the RNAU. In some embodiments, when the UE receives a second RRC response message sent by the base station, the UE stops the second timer. In some embodiments, a stop condition of the second timer includes that the UE receives the second RRC response message. The second RRC response message is, for example, an RRCResume message, an RRCSetup message, an RRCRelease message, or another RRC message that has an identical function but is not standardized in the 3GPP.

Case 2: The RNAU is triggered by a system information block (system information block, SIB) 1, and the triggered RNAU is related to the RNA configured by the base station for the UE. In some embodiments, when a serving cell of the UE does not belong to the configured RNA, the UE may trigger the RNAU. For example, when a serving cell obtained through cell reselection that occurs on the UE does not belong to the configured RNA, the UE may trigger the RNAU. For example, the terminal moves, and the cell reselection occurs. In some embodiments, after the UE reads the SIB1 in a serving cell (for example, a new serving cell obtained through cell reselection), if a cell provided by the SIB1 does not belong to the cell list configured by the base station for the UE, or a RAN area provided by the SIB1 does not belong to the RAN area list configured by the base station for the UE, the UE may trigger the RNAU. For example, when a cell identity read by the UE from the SIB1 does not belong to cell identities included in the cell list that is configured by the base station for the UE and that is in the RAN-NotificationArealnfo IE, the UE may trigger the RNAU. For example, if a TAC, of a cell, read by the UE from the SIB1 does not belong to TACs included in the RAN area list that is configured by the base station for the UE and that is in the RAN-NotificationAreaInfo IE, the UE may trigger the RNAU.

The following describes, by using an example, an implementation for performing the RNAU.

In some embodiments, when the UE triggers the RNAU, the UE may initiate an RRC connection resume procedure that is for the RNAU. In some embodiments, that the UE initiates the RRC connection resume procedure that is for the RNAU may include: An RRC layer of the UE initiates a procedure of requesting the resume of a suspended RRC connection (requesting the resume of a suspended RRC connection). In some embodiments, that the UE initiates the RRC connection resume procedure that is for the RNAU may include: The UE sends the RRC request message to the base station, for example, an RRC resume request message such as an RRCResumeRequest message or an RRCResumeRequest1, where a resumeCause IE in the RRC request message may be set to ma-Update.

In some embodiments, that the UE initiates the RRC connection resume procedure that is for the RNAU may further include initializing the RRC connection resume procedure, and may specifically include: If an emergency service is currently being performed, the UE may select an access category (Access Category) as 2, and set, to emergency (emergency), a resumeCause IE in the RRC request message sent in the RRC connection resume procedure. If no emergency service is currently being performed, the UE may select an access category as 8. The access category can be used for access barring check (access barring check). Each access request can be associated with an access category, so that the base station can control the access request of the UE. In some embodiments, the access request may be an RRC connection resume request initiated by the UE.

In some embodiments, during initializing the RRC connection resume procedure, the UE selects an access category. Then, the UE may perform a unified access control (unified access control, UAC) procedure, and then determine whether an access attempt is barred. For example, each access attempt corresponds to an access category. For example, the access attempt is for initiating an RRC connection resume procedure that is for the RNAU. In this case, the access category is 2 or the access category is 8. When the access attempt is barred, the UE cannot initiate the RRC connection resume procedure that is for the RNAU. When the access attempt is not barred, the UE can initiate the RRC connection resume procedure that is for the RNAU. Specific cases are as follows.

Optionally, if the access attempt is barred, the UE may set a first variable to a first value and stop the access attempt.

Optionally, if the access attempt is barred, the UE may start a timer T390. For example, the UE starts the corresponding timer T390 for an access category corresponding to the barred access attempt. When the T390 of the access category runs, the UE considers that the access attempt is barred. When the T390 of the access attempt expires, for example, the T390 of the access attempt does not run, the UE considers that the barring corresponding to the access category is alleviated. For example, the access category is 2 or the access category is 8.

A value of the first variable is the first value or a second value. For example, the first variable indicates whether there is a pending RNA update (pendingRNA-Update), the first value is true (true), and the second value is false (false). In some embodiments, if the value of the first variable is the first value, it may indicate that there is a pending RNA update procedure. In some embodiments, if the value of the first variable is the second value, it may indicate that there is not a pending RNA update procedure. In some embodiments, if the value of the first variable is the first value, it may indicate that the RNAU is triggered but is not successfully performed (which may be understood as that the RRC connection resume procedure that is for the RNAU is not successfully performed).

If the access attempt is not barred, the UE may continue to perform initialization related to the RRC connection resume procedure, for example, applying a default physical layer configuration, a default SRB1 configuration, and a default MAC layer configuration, and the UE may set the first variable to the second value. Then, the UE may initiate transmission of the RRC request message, for example, re-storing an RRC configuration, re-setting up a PDCP entity of the SRB1, and resuming the SRB1, and the UE may perform transmission of the RRC request message to a bottom layer of the UE (where the bottom layer is relative to the RRC layer, for example, is a MAC layer or a physical layer). For example, after the RRC layer of the UE performs the foregoing initialization procedure, the RRC layer performs transmission of the RRC request message to the MAC layer, and then the MAC layer sends the RRC request message. In some embodiments, no transmission resource is configured for the UE in non-RRC connected state. When receiving a transmission requirement sent by the RRC layer, the MAC layer may initiate RA to send the RRC request message that is for the RNAU, for example, send the RRC request message in the foregoing msg3 or the foregoing msgA. In some other embodiments, the UE in non-RRC connected state has a preconfigured resource, for example, a CG resource or a PUR. Descriptions of the preconfigured resource are similar to the descriptions of the preconfigured resource in FIG. 9 and FIG. 10. When receiving the transmission requirement sent by an upper layer, the lower layer may send, on the preconfigured resource, the RRC request message that is for the RNAU. For example, the lower layer is the MAC layer, and the upper layer is the RRC layer. For example, the lower layer is the physical layer, and the upper layer is the RRC layer. For example, the lower layer is the physical layer, and the upper layer is the MAC layer. After receiving the transmission requirement sent by RRC layer, the MAC layer indicates the transmission requirement to the physical layer. The resumeCause IE in the RRC request message that is for the RNAU is set to ma-Update. In some embodiments, the base station receives the RRC request message that is for the RNAU and that is sent by the UE, and may learn that the UE is currently requesting for the RNAU, so as to learn of a current status of the UE, for example, a movement status.

In some embodiments, the base station successfully receives the RRC request message that is for the RNAU and that is sent by the UE. The base station may send a third RRC response message to the UE after contention resolution succeeds (for example, after sending a contention resolution message to the UE). The third RRC response message is, for example, an RRCRelease message, an RRCRelease with suspend indication message, an RRCResume message, or another RRC message that has an identical function but is not standardized in the 3GPP. Optionally, when receiving the third RRC response message, the UE may consider that the RNAU succeeds. Specific examples are as follows.

Example 1: The UE performs the RNAU when being served by a current base station (which may be referred to as a new base station), but a context of the UE is stored in a previous base station (which may be referred to as an old base station). The old base station may send the context of the UE to the new base station through an Xn interface. After obtaining the context of the UE, the new base station may send an RRC response message to the UE, for example, send an RRCRelease message to enable the UE to enter an RRC IDLE state, or send an RRCRelease with suspend indication message to enable the UE to enter the RRC INACTIVE state, or sends an RRCResume message to enable the UE to enter an RRC CONNECTED state.

Example 2: The UE initiates the RNAU when being served by a current base station (which may be referred to as a new base station), but a context of the UE is stored in a previous base station (which may be referred to as an old base station). The old base station does not send the context of the UE to the new base station. In this case, an RRC state of the UE is controlled by the old base station, and the old base station may indirectly send an RRC response message to the UE based on an Xn interface message, to be specific, the RRC response message is sent to the new base station, and then the new base station forwards the RRC response message, for example, forwards an RRCRelease message to enable the UE to enter an RRC IDLE state, or forward an RRCRelease with suspend indication message to enable the UE to enter the RRC INACTIVE state.

In some other embodiments, the base station sends a fourth RRC response message to the UE. For example, when the base station fails to receive the RRC request message that is for the RNAU and that is sent by the UE, the base station may send the fourth RRC response message to the UE after the contention resolution succeeds. The fourth RRC response message is, for example, an RRCConnectionReject message, an RRCReject message, or another RRC message that has an identical function but is not standardized in the 3GPP. Optionally, after receiving the fourth RRC response message, the UE may return to the RRC INACTIVE state. Optionally, when the UE receives the fourth RRC response message, the UE may consider that an RRC resume request that is for the RNAU is rejected, and may set the first variable to the first value.

In some embodiments, after the UE receives the fourth RRC response message, if wait time (wait time) is configured in the fourth RRC response message, the UE starts a timer T302, where duration of the timer T302 is equal to the wait time. When the timer T302 runs and an access category is not 2 or 0, the UE considers that an access attempt is barred. If T390 corresponding to an access category does not run when the timer T302 expires, the UE considers that barring corresponding to the access category is alleviated. It should be noted that the timer T302 bars a request of the UE, and does not distinguish between access categories of the UE.

In some embodiments, the UE currently initiates the RRC connection resume procedure that is for the RNAU and selects an access category as 8. If an access attempt is not barred when the RRC connection resume procedure that is for the RNAU is initialized, the UE does not start T390 corresponding to the access category 8, and the UE may continue to perform initialization related to the RRC connection resume procedure and send the RRC request message corresponding to the RRC connection resume procedure that is for the RNAU. If the base station sends, to the UE, the fourth RRC response message in which the wait time is configured, the UE starts the timer T302. If T390 corresponding to the access category 8 does not run when the timer T302 expires, the UE considers that barring corresponding to the access category 8 is alleviated.

In some embodiments, the UE may set the first variable to the first value to continue to perform the RNAU when the current RNAU is triggered but is not successfully performed. For example, after the UE triggers the RNAU, if an access attempt is barred, or the fourth RRC response message (for example, the RRCReject message) is received in the RRC connection resume procedure that is for the RNAU, the UE may set the first variable to the first value. In some embodiments, when the first variable is set to the first value, the UE may continue to attempt to initiate the RRC connection resume procedure that is for the RNAU. In some embodiments, if barring corresponding to the access category 8 or the access category 2 is alleviated, an upper layer (for example, a NAS stratum) does not request to resume an RRC connection, for example, the upper layer (for example, the NAS stratum) does not request to resume the RRC connection that is for data transmission, and the first variable is set to the first value, the UE may continue to initiate the RRC connection resume procedure that is for the RNAU.

Currently, when the UE in non-RRC connected state and the base station perform SDT, the RNAU may be triggered. In this case, the terminal may stop currently performed SDT, and perform the RNAU. Consequently, transmission of small data of the SDT is affected. Specific examples are as follows.

Example 1: Before the UE and the base station perform RA SDT, the UE receives an RRCRelease message sent by the base station, and starts the second timer (for example, T380). Then, the UE initiates the RRC connection resume procedure that is for the SDT, for example, the 4-step SDT shown in FIG. 5 and FIG. 6, or the 2-step SDT shown in FIG. 7 and FIG. 8, where the second timer may be started before the UE sends a random access preamble. If the second timer expires before the UE receives the contention resolution message sent by the base station, in other words, the RNAU is triggered before the UE receives the contention resolution message sent by the base station, this case may be understood as that new RA that is for the RNAU is triggered in a current RA running procedure that is for the SDT. In this case, whether to perform the RNAU depends on implementation of the UE, to be specific, the implementation of the UE determines to continue the current RA procedure that is for the SDT, or to perform new RA that is for the RNAU. If the UE performs the new RA that is for the RNAU, the uplink small data and the downlink small data may not be sent or may fail to be sent, for example, the uplink small data sent together with the msg3 or msgA, and the downlink small data sent together with the RRC response message. If the second timer expires after the UE receives the contention resolution message sent by the base station, in other words, the RNAU is triggered after the UE receives the contention resolution message sent by the base station, the UE needs to discard a currently running RA SDT procedure, and initiate the RRC connection resume procedure that is for the RNAU. In this way, the uplink small data and the downlink small data may not be sent or may fail to be sent, for example, uplink small data and/or downlink small data whose transmission needs to be performed in subsequent transmission, and the downlink small data that is sent together with the RRC response message.

Example 2: Before the UE and the base station perform the CG-SDT, the UE receives an RRCRelease message sent by the base station, and starts a second timer (for example, T380). Then, the UE initiates an RRC connection resume procedure that is for the SDT, for example, the CG-SDT shown in FIG. 9 and FIG. 10, where the second timer may be started before the UE sends the RRC request message and/or the uplink small data. If the second timer expires, the UE needs to discard a currently running CG-SDT procedure, and initiate the RRC connection resume procedure that is for the RNAU. In this way, the uplink small data and the downlink small data may not be sent or may fail to be sent, for example, uplink small data and/or downlink small data whose transmission needs to be performed in subsequent transmission, and the downlink small data that is sent together with the RRC response message.

An embodiment of this application provides a transmission control method that may be applied to a communication system. The communication system includes, for example, a terminal and a network device. When the terminal and the network device perform SDT, an RNAU may not be triggered, so as to avoid impact on transmission of small data. For example, the impact includes that a transmission delay is increased, and that power consumption and signaling overheads are also increased when the SDT is subsequently initiated again. When the terminal and the network device perform SDT, the network device may obtain an RNA in which the terminal is located, and does not need to additionally perform an RNAU to notify the network device of a current status of the terminal.

The following describes an example in which the network device may obtain the RNA in which the terminal is located when the terminal and the network device perform the SDT. Example 1: A base station to which the terminal initiates the SDT this time is the same as a base station from which the terminal receives an RRCRelease message last time. In other words, the terminal receives the RRCRelease message when being served by the same base station, and initiates an RRC connection resume procedure that is for the SDT. Optionally, the base station from which the terminal receives the RRCRelease message last time may be a base station that configures an RNA for the terminal, and the base station may configure related information of the RNA for the terminal through the RRCRelease message, that is, the terminal is configured with the RNA and initiates the SDT when being served by an identical base station. The base station stores a context of the terminal. The base station may learn of the RNA in which the terminal is located. For example, the base station may leam, based on the context that is of the terminal and that is stored by the base station, of an RNA previously configured for the terminal. In this case, the terminal initiating the SDT does not move beyond a range of the configured RNA. Therefore, the base station may learn that the RNA in which the terminal is located is the configured RNA.

Example 2: A base station (which may be referred to as a new base station) to which the terminal initiates the SDT this time is different from a base station (which may be referred to as an old base station) from which the terminal receives an RRCRelease message last time. In other words, the terminal initiates, when being served by the new base station, the RRC connection resume procedure that is for the SDT. Optionally, the old base station from which the terminal receives the RRCRelease message last time may be a base station that configures an RNA for the terminal, and the old base station may configure related information of the RNA for the terminal through the RRCRelease message. The new base station may learn of the RNA in which the terminal is located. For example, the new base station may obtain a context of the terminal from the old base station, and the new base station may learn, based on the obtained context of the terminal and/or information about the old base station, whether the terminal moves beyond a range of the RNA configured by the old base station for the terminal. For example, if an RNA configuration obtained by the new base station from the context of the terminal does not include an RNA list or a cell list corresponding to the new base station, the new base station may learn that the terminal has moved beyond the range of the configured RNA; otherwise, the new base station may learn that the terminal has not moved beyond the range of the configured RNA. For another example, if an RNA list corresponding to the new base station does not include an RNA list corresponding to the old base station, or a cell list corresponding to the new base station does not include a cell list corresponding to the old base station, the new base station may learn that the terminal has moved beyond the range of the configured RNA; otherwise, the new base station may learn that the terminal has not moved beyond the range of the configured RNA.

The following describes, based on the foregoing descriptions, a transmission control method provided in embodiments of this application. The method may be applied to the communication system shown in FIG. 1. A network device and a terminal in the method may be the network device 120 and the UE 130 shown in FIG. 1.

The following embodiments are described by using an example of a transmission procedure that is based on a user plane protocol stack. For a first timer and a second timer in the following embodiments, refer to the foregoing descriptions of the first timer and the second timer.

In a possible implementation, when the terminal is in non-RRC connected state and a first preset condition is met, the terminal performs the RRC connection resume procedure that is for the RNAU. For descriptions of the RRC connection resume procedure that is for the RNAU, refer to descriptions of initiating the RRC connection resume procedure that is for the RNAU in the foregoing implementations of performing the RNAU.

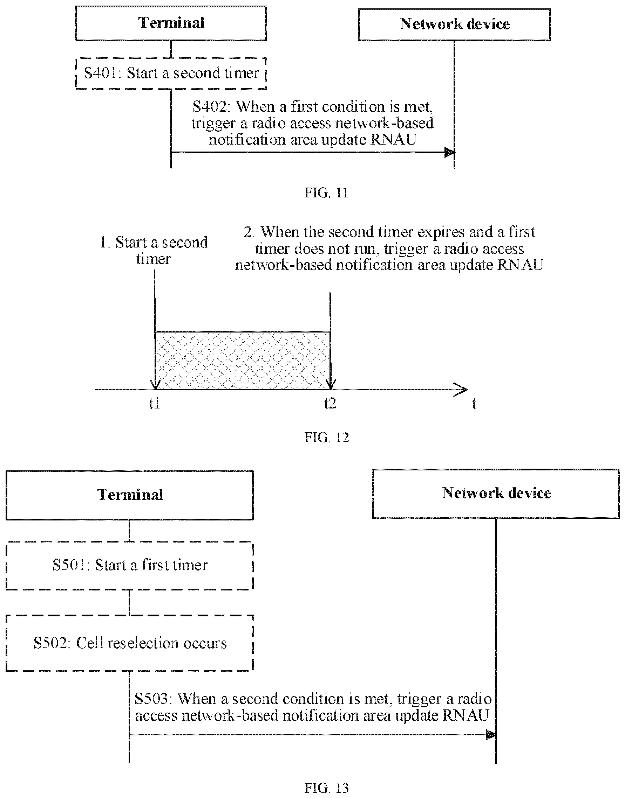

In some embodiments, the first preset condition includes that the second timer expires and the first timer does not run. A specific example is shown in FIG. 11. The first preset condition is the first condition in FIG. 11. In some embodiments, the first preset condition includes that the terminal receives a SIB1 of a first serving cell, the first serving cell does not belong to the configured RNA, and the first timer does not run. A specific example is shown in FIG. 13. The first preset condition is the second condition in FIG. 13. Examples of the foregoing descriptions are as follows.

Example 1: When the terminal is in RRC INACTIVE state, if the first timer (for example, T3XX) does not run and the second timer (for example, T380) expires, or if the first timer (for example, T3XX) does not run and a serving cell of the terminal does not belong to the configured RNA, the terminal may initiate the RRC connection resume procedure, and set, to rna-Update, a resumeCause IE that is in the RRC request message for initiating the RRC connection resume procedure.

Example 2: When the terminal is in RRC INACTIVE state, if the second timer (for example, T380) expires or a serving cell of the terminal does not belong to the configured RNA, if the first timer (for example, T3XX) does not run, the terminal may initiate the RRC connection resume procedure, and set, to rna-Update, a resumeCause IE that is in the RRC request message for initiating the RRC connection resume procedure.

Optionally, the performing the RRC connection resume procedure that is for the RNAU may include: initiating the RRC connection resume procedure, and setting, to rna-Update, the resumeCause IE that is in the RRC request message for initiating the RRC connection resume procedure.

FIG. 11 is a schematic flowchart of a transmission control method according to an embodiment of this application. The method includes but is not limited to the following steps.

S401: A terminal starts a second timer.

In some embodiments, S401 is an optional step.

In some embodiments, the terminal receives a first RRC response message, and starts the second timer. In some embodiments, the first RRC response message includes the second timer. In some embodiments, the first RRC response message includes duration of the second timer. The first RRC response message is, for example, an RRCRelease message, an RRCRelease with suspend config message, or another RRC message that has an identical function but is not standardized in the 3GPP.

S402: The terminal triggers an RNAU when a first condition is met.

In some embodiments, when the terminal is in non-RRC connected state, the terminal triggers the RNAU when the first condition is met. Optionally, the non-RRC connected state is an RRC INACTIVE state.

In some embodiments, the first condition includes that the terminal is in RRC INACTIVE state.

In some embodiments, the triggering the RNAU is performing the RRC connection resume procedure that is for the RNAU. Optionally, when performing the RRC connection resume procedure that is for the RNAU, the terminal may send an RRC request message to a network device, where a resumeCause IE in the RRC request message is ma-Update.

Specifically, the first condition includes that the second timer expires and a first timer does not run. Optionally, that the first timer does not run means: The first timer is not started.

In some embodiments, when the second timer expires, the terminal may determine whether the first timer runs. If the first timer is running, the terminal does not trigger the RNAU. If the first timer does not run, the terminal triggers the RNAU.

In some embodiments, when the second timer expires and the terminal does not have an SDT requirement when the second timer runs, the terminal may trigger the RNAU. Optionally, that the first timer does not run may represent: The terminal does not have an SDT requirement. Optionally, when the second timer runs, the first timer does not run. A specific example is shown in FIG. 12.

FIG. 12 shows an example of a sequence diagram.

As shown in FIG. 12, a horizontal axis is a time axis (t). At a first moment *t*₁, a second timer is started (for example, when a first RRC response message is received), and at a second moment *t*₂, the second timer expires. *t*₁ < *t*₂*.* The second timer runs between the first moment and the second moment, a first timer does not run between the first moment and the second moment, and the first timer is not started between the first moment and the second moment. At the second moment, the second timer expires and the first timer does not run. In this case, the terminal may trigger an RNAU.

Optionally, the foregoing RRC connection resume procedure that is for the SDT may include: initiating the RRC connection resume procedure, and setting, to mo-data, a resumeCause IE that is in an RRC request message for initiating the RRC connection resume procedure.

FIG. 13 is a schematic flowchart of another transmission control method according to an embodiment of this application. The method includes but is not limited to the following steps.

S501: A terminal starts a first timer.

In some embodiments, S501 is an optional step.

In some embodiments, when initiating an RRC connection resume procedure that is for SDT, the terminal starts the first timer. Optionally, the terminal starts the first timer when sending an RRC request message and/or uplink small data to a network device. For example, in the procedures shown in FIG. 5 to FIG. 8, the terminal starts the first timer when sending the msg3 or msgA to the network device based on the RA-SDT. For example, in the procedures shown in FIG. 9 and FIG. 10, the terminal starts the first timer when sending the RRC request message and/or the uplink small data to the network device based on the CG-SDT.

S502: Cell reselection occurs on the terminal.

In some embodiments, S502 is an optional step.

In some embodiments, the cell reselection occurs when the terminal and the network device are performing an SDT procedure. In some embodiments, when the first timer runs, the cell reselection occurs on the terminal, and the terminal stops the first timer.

In some embodiments, the cell reselection occurs on the terminal, and the terminal switches from a first cell to a second cell. In other words, a serving cell obtained through the cell reselection that occurs on the terminal is the second cell, and is subsequently referred to as a first serving cell. In some embodiments, the first serving cell of the terminal does not belong to a configured RNA, and the RNA is configured by the network device for the terminal before the cell reselection occurs on the terminal.

In some embodiments, after the cell reselection occurs, the terminal receives a SIB1 of a current serving cell, and determines the first serving cell based on the SIB1, where the SIB1 indicates the first serving cell. In some embodiments, the terminal determines, based on the SIB1, that the first serving cell does not belong to the configured RNA, where the RNA is configured by the network device for the terminal before the cell reselection occurs on the terminal. Specific examples are as follows.

Example 1: The terminal reads a cell identity of the first serving cell from the SIB1, and when the read cell identity of the first serving cell does not belong to a cell identity that is included in a cell list configured by the network device for the terminal and that is in a RAN-NotificationAreaInfo IE, the terminal determines that the first serving cell does not belong to the configured RNA.

Example 2: The terminal reads a TAC of the first serving cell from the SIB1, and when the read TAC of the first serving cell does not belong to a TAC that is included in a RAN area list configured by the network device for the terminal and that is in a RAN-NotificationAreaInfo IE, the terminal determines that the first serving cell does not belong to the configured RNA.

In some embodiments, after the cell reselection occurs on the terminal, the terminal is in non-RRC connected state. Optionally, the non-RRC connected state is an RRC INACTIVE state.

S503: The terminal triggers an RNAU when a second condition is met.

In some embodiments, when the terminal is in non-RRC connected state, the terminal triggers the RNAU when the second condition is met. Optionally, the non-RRC connected state is the RRC INACTIVE state.

In some embodiments, the second condition includes that the terminal is in RRC INACTIVE state after the cell reselection occurs on the terminal.

In some embodiments, the triggering the RNAU is performing an RRC connection resume procedure that is for an RNAU. Optionally, when performing the RRC connection resume procedure that is for the RNAU, the terminal may send the RRC request message to the network device, where a resumeCause IE in the RRC request message is ma-Update.

Optionally, the second condition includes that the terminal receives the SIB1 of the first serving cell, the first serving cell does not belong to the configured RNA, and the first timer does not run. In some embodiments, the first serving cell is the serving cell obtained through the cell reselection that occurs on the terminal. In some embodiments, the first serving cell is a cell indicated by the SIB1 received by the terminal after the cell reselection occurs on the terminal. The terminal determines, based on the SIB1 of the first serving cell, that the first serving cell does not belong to the configured RNA. For a specific example, refer to S502.

In some embodiments, the cell reselection occurs when the terminal does not have an SDT requirement. Optionally, that the first timer in the second condition does not run means: The first timer is not started. Optionally, that the first timer does not run may represent: The terminal does not have the SDT requirement.

In some other embodiments, the cell reselection occurs when the terminal is performing the SDT procedure. Optionally, in the SDT procedure performed by the terminal, the first timer runs, and the cell reselection occurs when the first timer runs. Optionally, that the first timer in the second condition does not run means: The first timer stops. Optionally, when the cell reselection occurs on the terminal, the first timer stops. Optionally, after the cell reselection occurs on the terminal, the terminal is in RRC INACTIVE state.

In some embodiments, the second condition further includes that the terminal cannot perform the SDT procedure in the first serving cell. Optionally, that the terminal cannot perform the SDT procedure in the first serving cell means: The terminal cannot continue a previous SDT procedure in the first serving cell. For example, after the cell reselection occurs, the terminal cannot continue the RRC connection resume procedure that is for the SDT and that is initiated in S501. Optionally, that the terminal cannot perform the SDT procedure in the first serving cell means: The terminal cannot initiate a new SDT procedure in the first serving cell. For example, after the cell reselection occurs, the terminal cannot continue to initiate a new SDT procedure for the RRC connection resume procedure that is for SDT and that is initiated in S501, or cannot initiate a new SDT procedure for newly obtained small data. Optionally, that the terminal cannot perform the SDT procedure in the first serving cell means: The terminal does not have SDT-related configuration information in the first serving cell. For example, the first serving cell does not support the SDT. Optionally, that the first serving cell does not support the SDT includes: SDT-related configuration is not broadcast in system information in the first serving cell. For another example, the first serving cell does not support RA-SDT and/or CG-SDT.

In some embodiments, when the terminal receives a SIB1 of a current serving cell after the cell reselection, and the first serving cell indicated by the SIB1 does not belong to the configured RNA, the terminal may determine whether the first timer runs. If the first timer runs, the terminal does not trigger the RNAU, and continues to perform the SDT. Optionally, that the first timer runs is that the first timer continues to run. The terminal may continue a previous SDT procedure in the serving cell. For example, after the cell reselection occurs on the terminal, the first timer continues to run, and the terminal may continue, in the serving cell, the RRC connection resume procedure that is for the SDT and that is initiated in S501. Optionally, that the first timer runs is that the first timer starts. The terminal may initiate, in the serving cell, a new RRC connection resume procedure that is for the SDT. For example, after the cell reselection occurs, the terminal initiates the new RRC connection resume procedure that is for the SDT, and starts the first timer. If the first timer does not run, the terminal triggers the RNAU. Optionally, the RNAU is triggered by the SIB1.

In some embodiments, when the terminal performs the SDT, the second timer expires, and the terminal may determine whether the first timer runs. If the first timer runs, the terminal does not trigger the RNAU, and continues to perform the SDT procedure. After the second timer expires, the cell reselection occurs on the terminal, the terminal stops the first timer, and the terminal is in RRC INACTIVE state. When the second condition is met, the terminal may perform the RRC connection resume procedure that is for the RNAU.

In some other embodiments, if the terminal is in RRC IDLE state after the cell reselection occurs, the terminal does not trigger the RNAU. In some other embodiments, after the cell reselection occurs, the terminal may perform the SDT procedure in the first serving cell. In this case, the terminal does not trigger the RNAU and performs the SDT procedure. Optionally, a case in which the terminal may perform the SDT procedure in the first serving cell is contrary to a case in which the terminal cannot perform the SDT procedure in the first serving cell. For details, refer to the foregoing descriptions.

It may be understood that, compared with the foregoing examples of two cases of triggering the RNAU, embodiments of this application are added with a trigger condition that the first timer does not run. To be specific, the terminal can trigger the RNAU only when the terminal has no SDT requirement or after the performed SDT procedure ends. When the first timer runs (for example, when the SDT procedure is being performed), the RNAU is not triggered. When the SDT is performed, the network device may obtain the RNA in which the terminal is located, and not performing the RNAU not only does not affect obtaining of a status of the terminal by the network device, but also avoids an impact on transmission of small data in the SDT procedure, for example, avoids an increase in a transmission delay, and avoids unnecessary signaling overheads and power consumption increased by subsequently re-initiating the SDT.

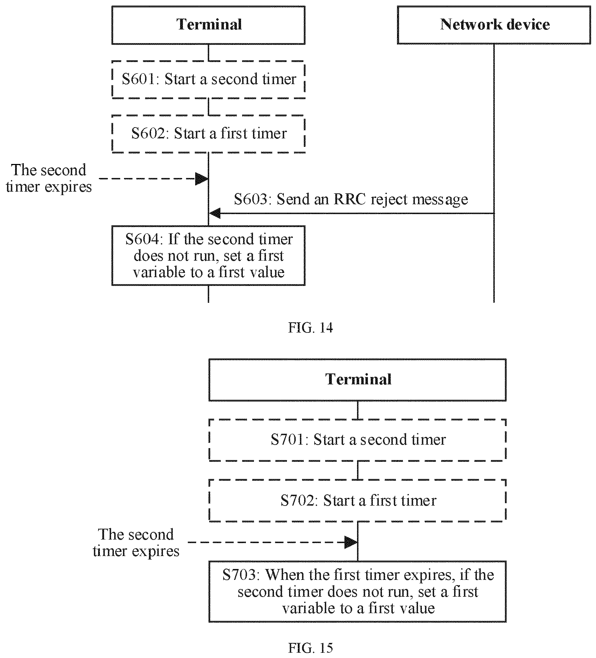

In a possible implementation, the terminal receives an RRC reject message. If the second timer does not run, the terminal may set a first variable to a first value. That the first variable is the first value indicates: There is a pending RNAU. Optionally, a value of the first variable is the first value or a second value. For example, the first variable indicates whether there is pendingRNA-Update, the first value is true, and the second value is false. For descriptions of the first variable and the first value, refer to descriptions of the first variable and the first value in the foregoing implementation of performing the RNAU. A specific example is shown in FIG. 14 below.

FIG. 14 is a schematic flowchart of another transmission control method according to an embodiment of this application. The method includes but is not limited to the following steps.

S601: A terminal starts a second timer.

In some embodiments, S601 is an optional step, and S601 is similar to S401 in FIG. 11.

S602: The terminal starts a first timer.

In some embodiments, S602 is an optional step, and S602 is similar to S501 in FIG. 13.

In some embodiments, an execution sequence of S601 and S602 may be that S601 is performed before S602, or S602 may be performed before S601.

S603: A network device sends an RRCReject message to the terminal.

In some embodiments, S603 is an optional step.

In some embodiments, when the first timer runs, the terminal receives the RRCReject message, and the first timer stops.

In some embodiments, after the terminal receives the RRCReject message, the terminal is in RRC INACTIVE state.

In some embodiments, when the terminal initiates, to the network device, an RRC connection resume procedure that is for SDT, the terminal sends an RRC request message to the network device, where the RRCReject message is sent by the network device in response to the RRC request message. The RRC request message is, for example, an RRC resume request message such as an RRCResumeRequest message or an RRCResumeRequest1.

S604: If the second timer does not run, the terminal sets a first variable to a first value.

In some embodiments, after the terminal receives the RRCReject message, the terminal is in non-RRC connected state. Optionally, the non-RRC connected state is the RRC INACTIVE state.

In some embodiments, after the terminal receives the RRCRej ect message, the terminal considers an SDT procedure fails (is rejected) this time, and the terminal is in RRC INACTIVE state. The terminal still needs to perform a periodic RNAU. However, because the second timer does not run in this case, the terminal may set the first variable to the first value.

In some embodiments, if the terminal is in RRC INACTIVE state after receiving the RRCReject message, and the second timer does not run, the terminal may set the first variable to the first value.

In some embodiments, the terminal receives the RRCReject message, and wait time is configured in the RRCReject message. In this case, the terminal may start atimer T302. Optionally, when the timer T302 runs, the RRC connection resume procedure of the UE is barred. When the timer T302 expires, the barred RRC connection resume procedure of the UE is alleviated. If an upper layer (for example, a NAS stratum) does not request to resume an RRC connection in this case, the UE may re-initiate an RRC connection resume procedure. For example, if the upper layer (for example, the NAS stratum) does not request to resume the RRC connection that is for data transmission, and the first variable is set to the first value, the UE may continue to initiate the RRC connection resume procedure that is for the RNAU.

In some embodiments, if the second timer expires when the terminal is performing the SDT procedure (for example, before the terminal receives the RRCReject message), the terminal may determine whether the first timer runs. If the first timer runs, the terminal does not trigger the RNAU, and continues to perform the SDT procedure. After the second timer expires, and after the terminal receives the RRCReject message, the terminal stops the first timer, and is in RRC INACTIVE state. If the second timer does not run, the terminal may set the first variable to the first value. Optionally, that the second timer does not run means: The second timer does not run after the second timer expires.

In some other embodiments, if the terminal is in RRC IDLE state after the terminal receives the RRCReject message, the terminal neither triggers the RNAU nor sets the first variable to the first value.

The message received by the terminal is not limited to the RRC reject message shown in FIG. 14. In some other embodiments, the RRCReject message may alternatively be an RRCConnectionReject message or another RRC message that has an identical function but is not standardized in the 3GPP.

This is not limited to the example shown in FIG. 14. In some other embodiments, after the terminal receives the RRC reject message, if the second timer does not run, the terminal may directly perform the RRC connection resume procedure that is for the RNAU. A specific example is similar to that in FIG. 14. A difference lies in that, "set a first variable to a first value" in FIG. 14 is replaced with "perform an RRC connection resume procedure that is for an RNAU". For example, an RRC layer of the terminal performs the RRC connection resume procedure that is for the RNAU. Optionally, the terminal receives the RRCReject message, and no wait time is configured in the RRCReject message. In this case, the terminal performs the RRC connection resume procedure that is for the RNAU. For example, the RRC layer of the terminal directly performs the RRC connection resume procedure that is for the RNAU.

In some other embodiments, the terminal may first set the first variable to the first value, and then the terminal performs the RRC connection resume procedure that is for the RNAU. For example, the RRC layer of the terminal directly performs the RRC connection resume procedure that is for the RNAU.

In some other embodiments, after the terminal receives the RRC reject message, if the second timer does not run, the terminal may start a third timer. When the third timer expires, if the first timer does not run, the terminal performs the RRC connection resume procedure that is for the RNAU. A specific example is similar to that in FIG. 14, and a difference lies in that, "set a first variable to a first value" in FIG. 14 is replaced with "start a third timer". Optionally, the method further includes: When the third timer expires, if the first timer does not run, the terminal performs the RRC connection resume procedure that is for the RNAU.

Optionally, the third timer is the same as the second timer. For example, duration of the third timer is equal to duration of the second timer. For example, the third timer is T380.

Optionally, the third timer is different from the second timer. For example, duration of the third timer is not equal to duration of the second timer. For example, the duration of the third timer is less than the duration of the second timer. For example, a unit of the duration of the third timer is millisecond or second.

Optionally, during running of the third timer, the terminal may wait for whether there is a data transmission requirement on the NAS stratum, for example, whether the NAS triggers the RRC layer to initiate a connection resume procedure. If there is the data transmission requirement on the NAS stratum, and the NAS stratum triggers the RRC layer to initiate the connection resume procedure, the terminal initiates an RRC connection resume procedure that is for data transmission, and does not perform the RRC connection resume procedure that is for the RNAU. The RRC connection resume procedure that is for data transmission includes the RRC connection resume procedure that is for the SDT and an RRC connection resume procedure that is for non-SDT.

In some embodiments,
1> else if RRCReject is received in response to an RRCResumeRequest or an RRCResumeRequest1:
2> if resume is triggered due to an SDT procedure, and
2> if T380 expires:
   3> set the variable pendingRNA-Update to true.

In some embodiments, if the terminal receives the RRCReject message in response to the RRCResumeRequest message or the RRCResumeRequest1 message, resuming is triggered based on the SDT procedure, and the second timer expires, the terminal may set the first variable to the first value, where the terminal may request the resuming by sending the RRCResumeRequest message or the RRCResumeRequest1 message. Optionally, the resuming is the RRC connection resume procedure that is for the SDT.

In a possible implementation, when the first timer expires, if the second timer does not run, the terminal may set the first variable to the first value. That the first variable is the first value indicates: There is a pending RNAU. For descriptions of the first variable and the first value, refer to descriptions of the first variable and the first value in the foregoing implementation of performing the RNAU. A specific example is shown in FIG. 15 below.

FIG. 15 is a schematic flowchart of another transmission control method according to an embodiment of this application. The method includes but is not limited to the following steps.

S701: A terminal starts a second timer.

In some embodiments, S701 is an optional step, and S701 is similar to S401 in FIG. 11.

S702: The terminal starts a first timer.

In some embodiments, S702 is an optional step, and S702 is similar to S501 in FIG. 13.

In some embodiments, an execution sequence of S701 and S702 may be that S701 is performed before S702, or S702 may be performed before S701.

S703: When the first timer expires, if the second timer does not run, the terminal sets a first variable to a first value.

In some embodiments, after the first timer expires, the terminal is in non-RRC connected state. Optionally, the non-RRC connected state is an RRC INACTIVE state. In some embodiments, when the terminal is in RRC INACTIVE state, the terminal initiates, to a network device, an RRC connection resume procedure that is for SDT, and starts the first timer. After the first timer expires, the terminal is still in RRC INACTIVE state.

In some embodiments, after the first timer expires, the terminal is in RRC INACTIVE state. The terminal still needs to perform a periodic RNAU. However, because the second timer does not run in this case, the terminal may set the first variable to the first value.

In some embodiments, if the terminal is in RRC INACTIVE state after the first timer expires, and the second timer does not run, the terminal sets the first variable to the first value.

In some embodiments, if the second timer expires when the terminal is performing the SDT procedure (for example, before the first timer expires), the terminal may determine whether the first timer runs. If the first timer runs, the terminal does not trigger the RNAU, and continues to perform the SDT procedure. After the second timer expires, if the first timer expires, the terminal is in RRC INACTIVE state. If the second timer does not run, the terminal may set the first variable to the first value. Optionally, that the second timer does not run means: The second timer does not run after the second timer expires.

In some other embodiments, if the terminal is in RRC IDLE state after the first timer expires, the terminal neither triggers the RNAU nor sets the first variable to the first value.

This is not limited to the example shown in FIG. 15. In some other embodiments, when the first timer expires, if the second timer does not run, the terminal may directly perform the RRC connection resume procedure that is for the RNAU. A specific example is similar to that in FIG. 15. A difference lies in that, "set a first variable to a first value" in FIG. 15 is replaced with "perform an RRC connection resume procedure that is for an RNAU". For example, an RRC layer of the terminal performs the RRC connection resume procedure that is for the RNAU.

In some other embodiments, the terminal may first set the first variable to the first value, and then the terminal performs the RRC connection resume procedure that is for the RNAU. For example, the RRC layer of the terminal directly performs the RRC connection resume procedure that is for the RNAU.

In some other embodiments, when the first timer expires, if the second timer does not run, the terminal may start a third timer. When the third timer expires, if the first timer does not run, the terminal performs the RRC connection resume procedure that is for the RNAU. A specific example is similar to that in FIG. 15, and a difference lies in that, "set a first variable to a first value" in FIG. 15 is replaced with "start a third timer". Optionally, the method further includes: When the third timer expires, if the first timer does not run, the terminal performs the RRC connection resume procedure that is for the RNAU.

Optionally, the third timer is the same as the second timer. For example, duration of the third timer is equal to duration of the second timer. For example, the third timer is T380.

Optionally, the third timer is different from the second timer. For example, duration of the third timer is not equal to duration of the second timer. For example, the duration of the third timer is less than the duration of the second timer. For example, a unit of the duration of the third timer is millisecond or second.

Optionally, during running of the third timer, the terminal may wait for whether there is a data transmission requirement on a NAS stratum, for example, whether the NAS triggers the RRC layer to initiate a connection resume procedure. If there is the data transmission requirement on the NAS stratum, and the NAS stratum triggers the RRC layer to initiate the connection resume procedure, the terminal initiates an RRC connection resume procedure that is for data transmission, and does not perform the RRC connection resume procedure that is for the RNAU. The RRC connection resume procedure that is for data transmission includes the RRC connection resume procedure that is for the SDT and an RRC connection resume procedure that is for non-SDT.

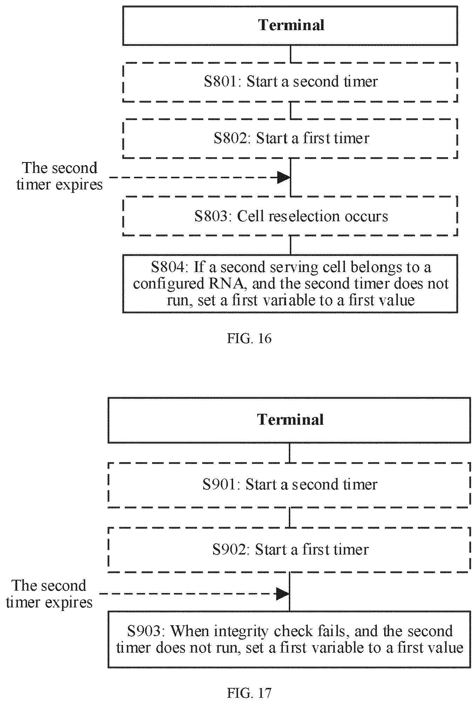

In a possible implementation, when a SIB1 of a second serving cell is received, if the second serving cell belongs to a configured RNA, and the second timer does not run, the terminal may set the first variable to the first value. That the first variable is the first value indicates: There is a pending RNAU. For descriptions of the first variable and the first value, refer to descriptions of the first variable and the first value in the foregoing implementation of performing the RNAU. A specific example is shown in FIG. 16 below.

FIG. 16 is a schematic flowchart of another transmission control method according to an embodiment of this application. The method includes but is not limited to the following steps.

S801: A terminal starts a second timer.

In some embodiments, S801 is an optional step, and S801 is similar to S401 in FIG. 11.

S802: The terminal starts a first timer.

In some embodiments, S802 is an optional step, and S802 is similar to S501 in FIG. 13.

In some embodiments, an execution sequence of S801 and S802 may be that S801 is performed before S802, or S802 may be performed before S801.

S803: Cell reselection occurs on the terminal.

In some embodiments, S803 is an optional step.

In some embodiments, the cell reselection occurs when the terminal and a network device are performing an SDT procedure. In some embodiments, when the first timer runs, the cell reselection occurs on the terminal, and the terminal stops the first timer.

In some embodiments, the cell reselection occurs on the terminal, and the terminal switches from a third cell to a fourth cell. In other words, a serving cell obtained through the cell reselection that occurs on the terminal is the fourth cell, and is subsequently referred to as a second serving cell. In some embodiments, the second serving cell of the terminal belongs to a configured RNA, and the RNA is configured by the network device for the terminal before the cell reselection occurs on the terminal.

In some embodiments, after the cell reselection occurs, the terminal receives a SIB1 of a current serving cell, and determines the second serving cell based on the SIB1, where the SIB1 indicates the second serving cell. In some embodiments, the terminal determines, based on the SIB1, that the second serving cell belongs to the configured RNA, where the RNA is configured by the network device for the terminal before the cell reselection occurs on the terminal. A specific example is similar to S502 in FIG. 11, and details are not described again.

In some embodiments, after the cell reselection occurs on the terminal, the terminal is in non-RRC connected state. Optionally, the non-RRC connected state is an RRC INACTIVE state.

S804: If the second serving cell belongs to the configured RNA, and the second timer does not run, the terminal sets a first variable to a first value.

In some embodiments, after the cell reselection occurs on the terminal, the terminal is in non-RRC connected state. Optionally, the non-RRC connected state is the RRC INACTIVE state. In some embodiments, when the terminal is in RRC INACTIVE state, the terminal initiates, to the network device, an RRC connection resume procedure that is for SDT, and starts the first timer. The cell reselection occurs when the first timer runs, and the terminal is still in RRC INACTIVE state.

In some embodiments, if the terminal is in RRC INACTIVE state after the cell reselection that occurs on the terminal, the second serving cell belongs to the configured RNA, and the second timer does not run, the terminal may set the first variable to the first value.

In some embodiments, when the terminal is in RRC INACTIVE state, if the second serving cell belongs to the configured RNA, the second timer does not run, and the terminal cannot perform the SDT procedure in the second serving cell, the terminal may set the first variable to the first value. Optionally, that the terminal cannot perform the SDT procedure in the second serving cell means: The terminal cannot continue a previous SDT procedure in the second serving cell. For example, after the cell reselection occurs, the terminal cannot continue the RRC connection resume procedure that is for the SDT and that is initiated in S802. Optionally, that the terminal cannot perform the SDT procedure in the second serving cell means: The terminal cannot initiate a new SDT procedure in the second serving cell. For example, after the cell reselection occurs, the terminal cannot continue to initiate a new SDT procedure for the RRC connection resume procedure that is for SDT and that is initiated in S802, or cannot initiate a new SDT procedure for newly obtained small data. Optionally, that the terminal cannot perform the SDT procedure in the second serving cell means: The terminal does not have SDT-related configuration information in the second serving cell. For example, the second serving cell does not support the SDT. Optionally, that the second serving cell does not support the SDT includes: SDT-related configuration is not broadcast in system information in the second serving cell. For another example, the second serving cell does not support RA-SDT and/or CG-SDT.

In some embodiments, after the cell reselection occurs on the terminal, the terminal is in RRC INACTIVE state. The terminal still needs to perform a periodic RNAU. However, because the second timer does not run in this case, the terminal may set the first variable to the first value.

In some embodiments, if the second timer expires when the terminal is performing the SDT procedure (for example, before the cell reselection occurs), the terminal may determine whether the first timer runs. If the first timer runs, the terminal does not trigger the RNAU, and continues to perform the SDT procedure. Optionally, that the first timer runs is that the first timer continues to run, and the terminal may continue the previous SDT procedure in the second serving cell. Optionally, that the first timer runs is that the first timer is started, and the terminal may initiate, in the second serving cell, a new RRC connection resume procedure that is for the SDT. After the second timer expires, the cell reselection occurs on the terminal, the terminal stops the first timer, and the terminal is in RRC INACTIVE state. If the second timer does not run, the terminal may set the first variable to the first value. Optionally, that the second timer does not run means: The second timer does not run after the second timer expires.

In some other embodiments, if the terminal is in RRC IDLE state after the cell reselection that occurs on the terminal, the terminal neither triggers the RNAU nor sets the first variable to the first value. In some other embodiments, after the cell reselection that occurs on the terminal, the terminal may perform the SDT procedure in the second serving cell, and the terminal neither triggers the RNAU nor sets the first variable to the first value.

This is not limited to the example shown in FIG. 16. In some other embodiments, when a SIB1 of the second serving cell is received, if the second serving cell belongs to the configured RNA, and the second timer does not run, the terminal may directly perform an RRC connection resume procedure that is for the RNAU. A specific example is similar to that in FIG. 16. A difference lies in that, "set a first variable to a first value" in FIG. 16 is replaced with "perform an RRC connection resume procedure that is for an RNAU". For example, an RRC layer of the terminal performs the RRC connection resume procedure that is for the RNAU.

In some other embodiments, the terminal may first set the first variable to the first value, and then the terminal performs the RRC connection resume procedure that is for the RNAU. For example, the RRC layer of the terminal directly performs the RRC connection resume procedure that is for the RNAU.

In some other embodiments, when the SIB1 of the second serving cell is received, if the second serving cell belongs to the configured RNA, and the second timer does not run, the terminal starts a third timer. A specific example is similar to that in FIG. 16, and a difference lies in that, "set a first variable to a first value" in FIG. 16 is replaced with "start a third timer". Optionally, the method further includes: When the third timer expires, if the first timer does not run, the terminal performs the RRC connection resume procedure that is for the RNAU.

Optionally, the third timer is the same as the second timer. For example, duration of the third timer is equal to duration of the second timer. For example, the third timer is T380.

Optionally, the third timer is different from the second timer. For example, duration of the third timer is not equal to duration of the second timer. For example, the duration of the third timer is less than the duration of the second timer. For example, a unit of the duration of the third timer is millisecond or second.

Optionally, during running of the third timer, the terminal may wait for whether there is a data transmission requirement on a NAS stratum, for example, whether the NAS triggers the RRC layer to initiate a connection resume procedure. If there is the data transmission requirement on the NAS stratum, and the NAS stratum triggers the RRC layer to initiate the connection resume procedure, the terminal initiates an RRC connection resume procedure that is for data transmission, and does not perform the RRC connection resume procedure that is for the RNAU. The RRC connection resume procedure that is for data transmission includes the RRC connection resume procedure that is for the SDT and an RRC connection resume procedure that is for non-SDT.

In some embodiments,
1>if cell reselection occurs while T319 or T302 or T3XX is running:
2> if T380 expires during an SDT procedure or has expired during an SDT procedure:
3> set the variable pendingRNA-Update to true.

In some embodiments, if the cell reselection occurs on the terminal when a timer T319, a timer T302, or a first timer T3XX is running, and if a second timer T380 expires or has expired in the SDT procedure, the terminal may set a variable pendingRNA-Update to true.

In a possible implementation, when integrity check of the terminal fails, if the second timer does not run, the terminal may set the first variable to the first value. That the first variable is the first value indicates: There is a pending RNAU. For descriptions of the first variable and the first value, refer to descriptions of the first variable and the first value in the foregoing implementation of performing the RNAU. A specific example is shown in FIG. 17 below.

FIG. 17 is a schematic flowchart of another transmission control method according to an embodiment of this application. The method includes but is not limited to the following steps.

S901: A terminal starts a second timer.

In some embodiments, S901 is an optional step, and S901 is similar to S401 in FIG. 11.

S902: The terminal starts a first timer.

In some embodiments, S902 is an optional step, and S902 is similar to S501 in FIG. 13.

In some embodiments, an execution sequence of S901 and S902 may be that S901 is performed before S902, or S902 may be performed before S901.

S903: When integrity check of the terminal fails, if the second timer does not run, the terminal sets a first variable to a first value.

In some embodiments, when the first timer runs, the integrity check of the terminal fails. In some embodiments, that the integrity check of the terminal fails is: An RRC layer of the terminal receives an integrity check failure indicated by a bottom layer of the RRC layer, where the bottom layer of the RRC layer is, for example, a PDCP layer.

In some embodiments, after the integrity check of the terminal fails, the terminal is in RRC INACTIVE state. In some embodiments, when the terminal is in RRC INACTIVE state, the terminal initiates, to a network device, an RRC connection resume procedure that is for SDT, and starts the first timer. After the integrity check of the terminal fails when the first timer runs, the terminal is still in RRC INACTIVE state.

In some embodiments, after the integrity check of the terminal fails, the terminal is in RRC INACTIVE state. The terminal still needs to perform a periodic RNAU. However, because the second timer does not run in this case, the terminal may set the first variable to the first value.

In some embodiments, if the second timer expires when the terminal is performing an SDT procedure (for example, before the integrity check of the terminal fails), the terminal may determine whether the first timer runs. If the first timer runs, the terminal does not trigger the RNAU, and continues to perform the SDT procedure. After the second timer expires, if the integrity check of the terminal fails, the terminal is in RRC INACTIVE state. If the second timer does not run, the terminal may set the first variable to the first value. Optionally, that the second timer does not run means: The second timer does not run after the second timer expires.

In some other embodiments, if the terminal is in RRC IDLE state after the integrity check of the terminal fails, the terminal neither triggers the RNAU nor sets the first variable to the first value.

This is not limited to the example shown in FIG. 17. In some other embodiments, when the integrity check of the terminal fails, if the second timer does not run, the terminal may directly perform an RRC connection resume procedure that is for the RNAU. A specific example is similar to that in FIG. 17. A difference lies in that, "set a first variable to a first value" in FIG. 17 is replaced with "perform an RRC connection resume procedure that is for an RNAU". For example, the RRC layer of the terminal performs the RRC connection resume procedure that is for the RNAU.

In some other embodiments, the terminal may first set the first variable to the first value, and then the terminal performs the RRC connection resume procedure that is for the RNAU. For example, the RRC layer of the terminal directly performs the RRC connection resume procedure that is for the RNAU.

In some other embodiments, when the integrity check of the terminal fails, if the second timer does not run, the terminal may start a third timer. When the third timer expires, if the first timer does not run, the terminal performs the RRC connection resume procedure that is for the RNAU. A specific example is similar to that in FIG. 17, and a difference lies in that, "set a first variable to a first value" in FIG. 17 is replaced with "start a third timer". Optionally, the method further includes: When the third timer expires, if the first timer does not run, the terminal performs the RRC connection resume procedure that is for the RNAU.

Optionally, the third timer is the same as the second timer. For example, duration of the third timer is equal to duration of the second timer. For example, the third timer is T380.

Optionally, the third timer is different from the second timer. For example, duration of the third timer is not equal to duration of the second timer. For example, the duration of the third timer is less than the duration of the second timer. For example, a unit of the duration of the third timer is millisecond or second.

Optionally, during running of the third timer, the terminal may wait for whether there is a data transmission requirement on a NAS stratum, for example, whether the NAS triggers the RRC layer to initiate a connection resume procedure. If there is the data transmission requirement on the NAS stratum, and the NAS stratum triggers the RRC layer to initiate the connection resume procedure, the terminal initiates an RRC connection resume procedure that is for data transmission, and does not perform the RRC connection resume procedure that is for the RNAU. The RRC connection resume procedure that is for data transmission includes the RRC connection resume procedure that is for the SDT and an RRC connection resume procedure that is for non-SDT.

It may be understood that, in this application, the RNAU is not triggered when the SDT procedure is performed. When the SDT is performed, the network device may obtain an RNA in which the terminal is located, and not performing the RNAU not only does not affect obtaining of a status of the terminal by the network device, but also can avoid an impact on transmission of small data in the SDT procedure.

In addition, for a case in which the SDT abnormally ends (for example, when a fourth RRC response message is received, cell reselection occurs, the first timer expires, or the integrity check of the terminal fails), if the second timer does not run (for example, the second timer does not run after the second timer expires), the terminal may set the first variable to the first value, so that the UE can continue to periodically trigger the RNAU subsequently, and normal performing of the RNAU is not affected.

In a possible implementation, if the first variable is set to the first value in the SDT procedure, the terminal may perform the RRC connection resume procedure that is for the RNAU. In some embodiments, if the first variable is set to the first value in the SDT procedure, and an upper layer (for example, the NAS stratum) does not request to resume an RRC connection, the terminal performs the RRC connection resume procedure that is for the RNAU. In some embodiments, if barring of an access category 2 or 8 of the terminal is alleviated, an upper layer (for example, the NAS stratum) does not request to resume an RRC connection, and the first variable is set to the first value, the terminal performs the RRC connection resume procedure that is for the RNAU. In some embodiments, if barring of the access category of the terminal in the SDT procedure is alleviated, an upper layer (for example, the NAS stratum) does not request to resume an RRC connection, and the first variable is set to the first value, the terminal performs the RRC connection resume procedure that is for the RNAU. In some embodiments, if access barring is alleviated and an upper layer (such as the NAS stratum) does not request the RRC layer to perform RRC connection resume, and if the first variable is the first value, the terminal may perform the RRC connection resume procedure that is for the RNAU.

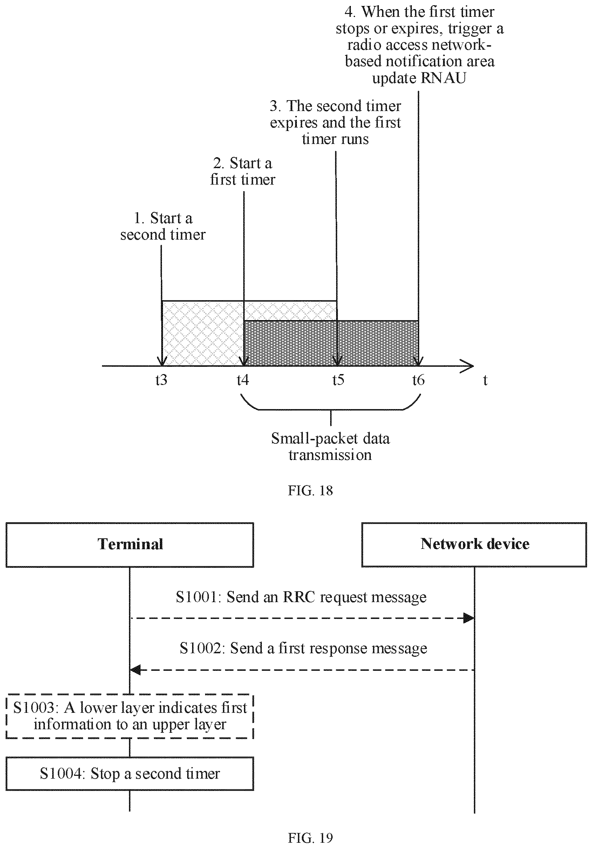

FIG. 18 shows an example of another sequence diagram.

As shown in FIG. 18, a horizontal axis is a time axis (t). At a third moment *t*₃, a second timer is started (for example, when a first RRC response message is received). At a fourth moment *t*₄, a first timer is started (for example, when an RRC request message is sent). At a fifth moment *t*₅, the second timer expires. At a sixth moment *t*₆, the first timer stops or expires. *t*₃ < *t*₄ < *t*₅ *< t*₆. The second timer runs between the third moment and the fifth moment, the first timer runs between the fourth moment and the sixth moment, and the terminal performs an SDT procedure between the fourth moment and the sixth moment. At the fifth moment, when the terminal performs the SDT procedure, the second timer expires, and the terminal does not trigger an RNAU. In other words, when the second timer expires and the first timer runs, the terminal does not trigger the RNAU.

In some embodiments, at the sixth moment, cell reselection occurs on the terminal, the first timer stops, and the terminal is in RRC INACTIVE state. If a serving cell of the terminal obtained through the cell reselection does not belong to a configured RNA, and the terminal cannot perform the SDT procedure in the serving cell, the terminal may trigger the RNAU. Optionally, the triggering the RNAU is performing an RRC connection resume procedure that is for the RNAU. For details, refer to the descriptions in FIG. 13.

In some other embodiments, at the sixth moment, the terminal receives a fourth RRC response message, the first timer stops, and the terminal is in RRC INACTIVE state. If the second timer does not run, the terminal may trigger the RNAU. Optionally, the triggering the RNAU may be setting a first variable to a first value. For details, refer to the descriptions in FIG. 14.

In some other embodiments, at the sixth moment, the first timer expires, and the terminal is in RRC INACTIVE state. If the second timer does not run, the terminal may trigger the RNAU. Optionally, the triggering the RNAU may be setting a first variable to a first value. For details, refer to the descriptions in FIG. 15.

In some other embodiments, at the sixth moment, cell reselection occurs on the terminal, the first timer stops, and the terminal is in RRC INACTIVE state. If a serving cell of the terminal obtained through the cell reselection belongs to a configured RNA, the terminal cannot perform the SDT procedure in the serving cell, and the second timer does not run in this case, the terminal may trigger the RNAU. Optionally, the triggering the RNAU may be setting the first variable to the first value. For details, refer to the descriptions in FIG. 16.

In some other embodiments, at the sixth moment, the integrity check of the terminal fails, the first timer stops, and the terminal is in RRC INACTIVE state. If the second timer does not run, the terminal may trigger the RNAU. Optionally, the triggering the RNAU may be setting the first variable to the first value. For details, refer to the descriptions in FIG. 17.

In a possible implementation, when performing the SDT procedure, the terminal may stop the second timer. A specific example is shown in FIG. 19 below.

FIG. 19 is a schematic flowchart of another transmission control method according to an embodiment of this application. The method includes but is not limited to the following steps.

S1001: A terminal sends an RRC request message to a network device.

In some embodiments, S1001 is an optional step.

In some embodiments, when the terminal has an SDT requirement, the terminal may initiate an RRC connection resume procedure that is for SDT. The RRC connection resume procedure may include: The terminal sends the RRC request message to the network device based on the SDT.

In some embodiments, when the terminal has an SDT requirement, the terminal may initiate an RRC connection resume procedure that is for 4-step SDT. For the procedure, refer to the procedures shown in FIG. 5 and FIG. 6. The RRC request message sent by the terminal in the RRC connection resume procedure is sent based on the 4-step SDT, and the RRC request message may be in a msg3.

In some embodiments, when the terminal has an SDT requirement, the terminal may initiate an RRC connection resume procedure that is for 2-step SDT. For the procedure, refer to the procedures shown in FIG. 7 and FIG. 8. The RRC request message sent by the terminal in the RRC connection resume procedure is sent based on the 2-step SDT, and the RRC request message may be in a msgA.

In some embodiments, when the terminal has an SDT requirement, the terminal may initiate an RRC connection resume procedure that is for CG-SDT. For the procedure, refer to the procedures shown in FIG. 9 and FIG. 10. The RRC request message sent by the terminal in the RRC connection resume procedure is sent based on the CG-SDT.

In some embodiments, when sending the RRC request message to the network device, the terminal sends uplink small data together. For a specific example, refer to the procedures shown in FIG. 5, FIG. 7, and FIG. 9.

S1002: The network device sends a first response message to the terminal.

In some embodiments, S1002 is an optional step.

In some embodiments, after receiving the RRC request message sent by the terminal, the network device may send the first response message to the terminal. In some embodiments, after receiving the RRC request message and the uplink small data that are sent by the terminal, the network device may send the first response message to the terminal.

In some embodiments, the terminal initiates RA-SDT, and the network device receives the RRC request message sent by the terminal based on the RA-SDT, and may send the first response message to the terminal. Optionally, the first response message may indicate that contention resolution succeeds. Optionally, the first response message may indicate that a random access procedure is successfully completed. Optionally, the terminal receives the first response message, and determines that the contention resolution succeeds. Optionally, the terminal receives the first response message, and determines that the random access procedure is successfully completed. Optionally, the first response message is the contention resolution message shown in FIG. 5 to FIG. 8.

In some embodiments, the terminal initiates the CG-SDT, and the network device receives the RRC request message sent by the terminal based on the CG-SDT, and may send the first response message to the terminal. Optionally, the first response message may be specific to the RRC request message and/or the uplink small data sent in S1001. Optionally, the first response message may indicate that the RRC request message is sent successfully. Optionally, the first response message may indicate that the uplink small data is sent successfully. Optionally, the first response message is the feedback response message shown in FIG. 9 and FIG. 10. Optionally, the first response message may be downlink control information (downlink control information, DCI) for scheduling retransmission. Optionally, the first response message may be DCI for scheduling new transmission.

S1003: A lower layer of the terminal indicates first information to an upper layer.

In some embodiments, S1003 is an optional step.

Specifically, the terminal may include a plurality of layers. For a specific example, refer to the layers included in the user plane protocol stack or the control plane protocol stack shown in FIG. 2 and FIG. 3. It may be understood that the bottom layer and the upper layer in S1003 are relative concepts. In some embodiments, the bottom layer of the terminal in S1003 is a first layer, and the first layer is a layer in the user plane protocol stack or the control plane protocol stack. In some embodiments, the first layer is a layer that receives the first response message sent by the network device. In some embodiments, in S1003, the upper layer is a second layer, and the second layer is a layer above the first layer.

For example, the first layer is a MAC layer, and the second layer is an RRC layer.

For example, the first layer is a physical layer, and the second layer is a MAC layer.

For example, the first layer is a physical layer, and the second layer is an RRC layer.

S1004: The terminal stops a second timer.

In some embodiments, a third layer of the terminal receives the first information indicated by the lower layer of the third layer, and stops the second timer. Optionally, the third layer is the RRC layer. Optionally, the lower layer of the third layer is the MAC layer. Optionally, the lower layer of the third layer is the physical layer.

In some embodiments, in an RA-SDT procedure, the MAC layer of the terminal receives the first response message sent by the network device, and the MAC layer indicates the first information to the RRC layer above the MAC layer. Optionally, the first information indicates that the contention resolution succeeds, and optionally, the first indication information indicates that the random access procedure is successfully completed. The RRC layer receives the first information indicated by the MAC layer, and stops the second timer. Optionally, in S1003, the bottom layer is the MAC layer, the upper layer is the RRC layer, and in S1004, the second timer is stopped at the RRC layer.

In some embodiments, in a CG-SDT procedure, the MAC layer of the terminal receives the first response message sent by the network device, the MAC layer indicates the first information to the RRC layer above the MAC layer, where the first information indicates that the RRC request message and/or the uplink small data are/is successfully sent, and the RRC layer receives the first information indicated by the MAC layer, and stops the second timer. Optionally, in S1003, the bottom layer is the MAC layer, the upper layer is the RRC layer, and in S1004, the second timer is stopped at the RRC layer.

In some embodiments, in the CG-SDT procedure, the physical layer of the terminal receives the first response message sent by the network device, the physical layer indicates the first information to the RRC layer above the physical layer, where the first information indicates that the RRC request message and/or the uplink small data are/is successfully sent, and the RRC layer receives the first information indicated by the physical layer, and stops the second timer. Optionally, in S1003, the bottom layer is the physical layer, the upper layer is the RRC layer, and in S1004, the second timer is stopped at the RRC layer.

In some embodiments, in the CG-SDT procedure, the physical layer of the terminal receives the first response message sent by the network device, the physical layer indicates second information to the MAC layer above the physical layer, and the second information indicates that the RRC request message and/or the uplink small data are/is successfully sent. The MAC layer receives the second information indicated by the physical layer, and indicates the first information to the RRC layer above the MAC layer, where the first information indicates that the RRC request message and/or the uplink small data are/is successfully sent, and the RRC layer receives the first information indicated by the MAC layer, and stops the second timer. Optionally, in S1003, the bottom layer is the MAC layer, the upper layer is the RRC layer, and in S1004, the second timer is stopped at the RRC layer.

In some embodiments, before the terminal stops the second timer, the second timer is in on state. For example, before initiating the RRC connection resume procedure for the SDT (for example, S1001), the terminal starts the second timer.

In some embodiments, after stopping the second timer, the terminal may perform subsequent transmission based on an SDT procedure this time. For details, refer to the descriptions of the subsequent transmission in FIG. 5 to FIG. 10. The second timer is stopped and does not expire. Therefore, an RNAU is not triggered, and transmission of small data in the SDT procedure is not affected.

In some embodiments, after stopping the second timer, the terminal may receive an RRC response message sent by the network device. For details, refer to the foregoing descriptions of the RRC response message in FIG. 5 to FIG. 10. In some embodiments, after stopping the second timer, the terminal receives a first RRC response message sent by the network device, for example, an RRCRelease message, an RRCRelease with suspend config message, or another RRC message that has an identical function but is not standardized in the 3GPP, and the terminal may start the second timer.

It may be understood that the starting the second timer in the foregoing embodiment may include a plurality of cases. The following shows two cases as examples.

Case 1: When performing the SDT, the terminal receives the first RRC response message, stops the first timer, and starts the second timer. For example, first, when the terminal has an SDT requirement, the terminal initiates the RRC connection resume procedure that is for the SDT, and starts the first timer. Then, when the second timer expires, but the first timer is in a running state, the terminal does not trigger the RNAU, and continues to perform the SDT. Finally, after the terminal receives the first RRC response message, the terminal considers that the SDT this time succeeds, stops the first timer, and keeps in non-RRC connected state. In addition, after receiving the first RRC response message, the terminal starts the second timer, so that the RNAU may continue to be subsequently triggered periodically.

Case 2: When performing the SDT, the terminal receives a fifth RRC response message, and stops the first timer. When subsequently receiving the first RRC response message, the terminal then starts the second timer, where the fifth RRC response message is, for example, an RRCResume message, an RRCSetup message, or another RRC message that has an identical function but is not standardized in the 3GPP. For example, first, when the terminal has an SDT requirement, the terminal initiates the RRC connection resume procedure that is for the SDT, and starts the first timer. Then, when the second timer expires, but the first timer is in a running state, the terminal does not trigger the RNAU, and continues to perform the SDT. Then, after the terminal receives the fifth RRC response message, the terminal considers that the SDT this time succeeds, stops the first timer, and may enter an RRC CONNECTED state from a non-RRC connected state. Subsequently, the terminal receives the first RRC response message, enters the non-RRC connected state from the RRC CONNECTED state, and starts the second timer, so that the RNAU may continue to be subsequently triggered periodically.

In a possible implementation, after the terminal receives an RRC reject message, if the second timer does not run, the terminal may set a first variable to a first value. A specific example is similar to that in FIG. 14. A difference lies in that, "the second timer expires" in FIG. 14 needs to be replaced with "the second timer stops". For descriptions of stopping of the second timer, refer to FIG. 19 above.

In a possible implementation, after the terminal receives an RRC reject message, if the second timer does not run, the terminal may directly perform an RRC connection resume procedure that is for the RNAU. A specific example is similar to that in FIG. 14. A difference lies in that S604 may be changed to: If the second timer does not run, perform the RRC connection resume procedure that is for the RNAU, and "the second timer expires" in FIG. 14 needs to be replaced with "the second timer stops". For descriptions of stopping of the second timer, refer to FIG. 19 above.

In a possible implementation, after the terminal receives an RRC reject message, if the second timer does not run, the terminal may start a third timer. When the third timer expires, if the first timer does not run, the terminal performs an RRC connection resume procedure that is for the RNAU. A specific example is similar to that in FIG. 14. A difference lies in that S604 may be changed to: If the second timer does not run, start the third timer. After S604, the method further includes: When the third timer expires, if the first timer does not run, the terminal performs the RRC connection resume procedure that is for the RNAU, and "the second timer expires" in FIG. 14 needs to be replaced with "the second timer stops". For descriptions of stopping of the second timer, refer to FIG. 19 above.

In a possible implementation, when the first timer expires, if the second timer does not run, the terminal may set the first variable to the first value. A specific example is similar to that in FIG. 15. A difference lies in that, "the second timer expires" in FIG. 15 needs to be replaced with "the second timer stops". For descriptions of stopping of the second timer, refer to FIG. 19 above.

In a possible implementation, when the first timer expires, if the second timer does not run, the terminal may directly perform the RRC connection resume procedure that is for the RNAU. A specific example is similar to that in FIG. 15. A difference lies in that S703 may be changed to: When the first timer expires, if the second timer does not run, perform the RRC connection resume procedure that is for the RNAU, and "the second timer expires" in FIG. 15 needs to be replaced with "the second timer stops". For descriptions of stopping of the second timer, refer to FIG. 19 above.

In a possible implementation, when the first timer expires, if the second timer does not run, the terminal may start the third timer. When the third timer expires, if the first timer does not run, the terminal performs the RRC connection resume procedure that is for the RNAU. A specific example is similar to that in FIG. 15. A difference lies in that S703 may be changed to: When the first timer expires, if the second timer does not run, start the third timer. After S703, the method further includes: When the third timer expires, if the first timer does not run, the terminal performs the RRC connection resume procedure that is for the RNAU, and "the second timer expires" in FIG. 15 needs to be replaced with "the second timer stops". For descriptions of stopping of the second timer, refer to FIG. 19 above.

In a possible implementation, when a SIB1 of a second serving cell is received, if the second serving cell belongs to a configured RNA, and the second timer does not run, the terminal may set the first variable to the first value. A specific example is similar to that in FIG. 16. A difference lies in that, "the second timer expires" in FIG. 16 needs to be replaced with "the second timer stops". For descriptions of stopping of the second timer, refer to FIG. 19 above.

In a possible implementation, when a SIB1 of a second serving cell is received, if the second serving cell belongs to a configured RNA, and the second timer does not run, the terminal may directly perform the RRC connection resume procedure that is for the RNAU. A specific example is similar to that in FIG. 15. A difference lies in that S804 may be changed to: If the second serving cell belongs to the configured RNA, and the second timer does not run, perform the RRC connection resume procedure that is for the RNAU, and "the second timer expires" in FIG. 16 needs to be replaced with "the second timer stops". For descriptions of stopping of the second timer, refer to FIG. 19 above.

In a possible implementation, when a SIB1 of a second serving cell is received, if the second serving cell belongs to a configured RNA, and the second timer does not run, the terminal starts the third timer. A specific example is similar to that in FIG. 16. A difference lies in that S804 may be changed to: If the second serving cell belongs to the configured RNA, and the second timer does not run, the terminal starts the third timer. After S804, the method further includes: When the third timer expires, if the first timer does not run, the terminal performs the RRC connection resume procedure that is for the RNAU, and "the second timer expires" in FIG. 16 needs to be replaced with "the second timer stops". For descriptions of stopping of the second timer, refer to FIG. 19 above.

In a possible implementation, when integrity check of the terminal fails, if the second timer does not run, the terminal may set the first variable to the first value. A specific example is similar to that in FIG. 17. A difference lies in that, "the second timer expires" in FIG. 17 needs to be replaced with "the second timer stops". For descriptions of stopping of the second timer, refer to FIG. 19 above.

In a possible implementation, when integrity check of the terminal fails, if the second timer does not run, the terminal may directly perform the RRC connection resume procedure that is for the RNAU. A specific example is similar to that in FIG. 17. A difference lies in that S903 may be changed to: When the integrity check fails and the second timer does not run, perform the RRC connection resume procedure that is for the RNAU, and "the second timer expires" in FIG. 17 needs to be replaced with "the second timer stops". For descriptions of stopping of the second timer, refer to FIG. 19 above.

In a possible implementation, when integrity check of the terminal fails, if the second timer does not run, the terminal may start the third timer. A specific example is similar to that in FIG. 17. A difference lies in that S903 may be changed to: When the integrity check fails and the second timer does not run, start the third timer. After S903, the method further includes: When the third timer expires, if the first timer does not run, the terminal performs the RRC connection resume procedure that is for the RNAU, and "the second timer expires" in FIG. 17 needs to be replaced with "the second timer stops". For descriptions of stopping of the second timer, refer to FIG. 19 above.

In a possible implementation, after the terminal sets the first variable to the first value in the SDT procedure, if access barring is alleviated and a non-access NAS stratum does not request the RRC layer to perform RRC connection resume, and if the first variable is the first value, the terminal may perform the RRC connection resume procedure that is for the RNAU.

It may be understood that the SDT procedure (for example, the SDT procedure shown in FIG. 5 to FIG. 10) in this application may include the foregoing RRC connection resume procedure that is for the SDT. Optionally, a resumeCause IE in the sent RRC request message is mo-data. The RNAU (for example, the foregoing example during implementation of performing the RNAU) in this application may include the foregoing RRC connection resume procedure that is for the RNAU. Optionally, the resumeCause IE in the sent RRC request message is ma-Update.

This is not limited to the foregoing enumerated cases. In some other embodiments, the RNAU may need to be performed when the terminal is in RRC IDLE state. A specific implementation is similar to the implementation of the UE in RRC INACTIVE state, but may be different in description. For example, the RRC connection resume procedure that is for the RNAU may be replaced with an RRC connection setup procedure that is for the RNAU.

The message received by the terminal is not limited to the SIB1 in the foregoing example. In some other embodiments, the terminal may receive another message, and determine, based on the message, whether a serving cell belongs to a configured RNA. For example, the terminal reads a cell identity from the message, and determines whether the read cell identity belongs to a cell identity that is included in a cell list configured by a base station for the UE and that is in a RAN-NotificationAreaInfo IE. For another example, the terminal reads a TAC of a cell from the message, determine whether the read TAC belongs to a TAC that is included in a RAN area list configured by a base station for the UE and that is in a RAN-NotificationAreaInfo IE. A manner of determining whether the serving cell belongs to the configured RNA is not limited in this application.

In some embodiments, after T380 expires or after the UE receives the SIB1 in a cell outside a current RNA of the UE, the UE in RRC INACTIVE state needs to trigger the RRC connection resume procedure that is for the RNAU. However, because the network device can know a cell location of UE that is performing SDT data transmission, the UE actually does not need to perform the RNAU. Therefore, RNAU triggering needs to be avoided in the SDT procedure.

In some embodiments, T380 is stopped in the SDT procedure. For example, after the SDT procedure starts, the UE stops T380 when receiving, from the network device, the first response message corresponding to the RRC request message of the UE. For example, the UE stops T380 when receiving a contention resolution MAC CE of the RA-SDT, or when receiving an ACK in response to an RRCResumeRequest sent in CG-SDT.

In some embodiments, an additional condition is introduced: The RNAU can be triggered only when an SDT failure detection timer does not run, that is, the first timer does not run, and T380 expires. The SDT failure detection timer is started when the UE initiates the RRC connection resume procedure that is for the SDT. In other words, when the SDT failure detection timer runs, the UE is performing the SDT procedure. Therefore, to avoid a periodic RNAU triggered when T380 expires, the additional condition may be added to a current condition for triggering the periodic RNAU.

It may be understood that the communication system architecture and the service scenario described in this application are intended to describe the technical solutions in this application more clearly, but do not constitute a limitation on the technical solutions provided in this application. A person of ordinary skill in the art may know that with evolution of the communication system architecture and emergence of a new service scenario, the technical solutions provided in this application are also applicable to similar technical problems.

A person of ordinary skill in the art may understand that all or some of the procedures of the methods in the foregoing embodiments may be implemented by a computer program instructing hardware related to the computer program. The computer program may be stored in a computer-readable storage medium. When the computer program is run, the procedures in the foregoing method embodiments may be included. The storage medium includes any medium that can store computer program code, such as a read-only memory (read-only memory, ROM), a random access memory (random access memory, RAM), a magnetic disk, or an optical disc.

## Claims

1. A transmission control method, applied to a terminal in non-radio resource control RRC connected state, wherein the method comprises:
performing, when a first preset condition is met, an RRC connection resume procedure that is for a radio access network-based notification area update RNAU, wherein
the first preset condition comprises that a second timer expires and a first timer does not run; or
the first preset condition comprises that the terminal receives a system information block SIB1 of a first serving cell, the first serving cell does not belong to a configured radio access network-based notification area RNA, and a first timer does not run; and
the first timer is started when the terminal initiates an RRC connection resume procedure that is for small data transmission SDT, and the second timer is started when the terminal receives an RRC release message comprising duration of the second timer.

2. The method according to claim 1, wherein the method further comprises:
when the first timer runs, if an RRC reject message is received, stopping the first timer; and
if the second timer does not run, setting a first variable to a first value, wherein that the first variable is the first value indicates that there is a pending RNA update procedure.

3. The method according to claim 1, wherein the method further comprises:
when the first timer runs, if an RRC reject message is received, stopping the first timer; and
if the second timer does not run, performing the RRC connection resume procedure that is for the RNAU.

4. The method according to claim 1, wherein the method further comprises:
when the first timer runs, if an RRC reject message is received, stopping the first timer;
if the second timer does not run, starting a third timer; and
when the third timer expires, if the first timer does not run, performing the RRC connection resume procedure that is for the RNAU.

5. The method according to claim 1, wherein the method further comprises:
when the first timer expires, if the second timer does not run, setting a first variable to a first value, wherein that the first variable is the first value indicates that there is a pending RNA update procedure.

6. The method according to claim 1, wherein the method further comprises:
when the first timer expires, if the second timer does not run, performing the RRC connection resume procedure that is for the RNAU.

7. The method according to claim 1, wherein the method further comprises:
when the first timer expires, if the second timer does not run, starting a third timer; and
when the third timer expires, if the first timer does not run, performing the RRC connection resume procedure that is for the RNAU.

8. The method according to any one of claims 5 to 7, wherein the non-radio resource control RRC connected state is an RRC inactive state; and after the first timer expires, the terminal is in RRC inactive state.

9. The method according to claim 1, wherein the method further comprises:
when the first timer runs, if cell reselection occurs, stopping the first timer;
receiving a SIB1 of a second serving cell, wherein the second serving cell is a serving cell obtained through the cell reselection that occurs on the terminal; and
when the SIB1 of the second serving cell is received, if the second serving cell belongs to the configured RNA, and the second timer does not run, setting a first variable to a first value, wherein that the first variable is the first value indicates that there is a pending RNA update procedure.

10. The method according to claim 1, wherein the method further comprises:
when the first timer runs, if cell reselection occurs, stopping the first timer;
receiving a SIB1 of a second serving cell, wherein the second serving cell is a serving cell obtained through the cell reselection that occurs on the terminal; and
when the SIB1 of the second serving cell is received, if the second serving cell belongs to the configured RNA, and the second timer does not run, performing the RRC connection resume procedure that is for the RNAU.

11. The method according to claim 1, wherein the method further comprises:
when the first timer runs, if cell reselection occurs, stopping the first timer;
receiving a SIB1 of a second serving cell, wherein the second serving cell is a serving cell obtained through the cell reselection that occurs on the terminal;
when the SIB1 of the second serving cell is received, if the second serving cell belongs to the configured RNA, and the second timer does not run, starting a third timer; and
when the third timer expires, if the first timer does not run, performing the RRC connection resume procedure that is for the RNAU.

12. The method according to any one of claims 9 to 11, wherein the non-radio resource control RRC connected state is an RRC inactive state; and after cell reselection occurs on the terminal, the terminal is in RRC inactive state.

13. The method according to claim 2, 5, or 9, wherein after the setting a first variable to a first value, the method further comprises:
if access barring is alleviated and a non-access NAS stratum does not request an RRC layer to perform RRC connection resume, and if the first variable is the first value, performing the RRC connection resume procedure that is for the RNAU.

14. The method according to any one of claims 1 to 13, wherein the non-radio resource control RRC connected state is the RRC inactive state.

15. A terminal, comprising a transceiver, a processor, and a memory, wherein the memory is configured to store a computer program, and the processor invokes the computer program to perform the method according to any one of claims 1 to 14.

16. A computer storage medium, wherein the computer storage medium stores a computer program; and when the computer program is executed by a processor, the method according to any one of claims 1 to 14 is implemented.
